# EUROPEAN PATENT APPLICATION

(11) **EP 4 529 235 A1**
(43) Date of publication of application: **26.03.2025**
(21) Application number: 23834663.9
(22) Date of filing: 27.06.2023
(51) Int. Cl.: H04W 4/06

(54) **COMMUNICATION METHOD AND APPARATUS**

(30) Priority: 05.07.2022 CN 202210785100; 23.09.2022 CN 202211167576
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); XU, Bin, Shenzhen, Guangdong 518129 (CN); CAO, Zhenzhen, Shenzhen, Guangdong 518129 (CN); WANG, Yan, Shenzhen, Guangdong 518129 (CN)
(74) Representative: Goddar, Heinz J.
(86) International application number: PCT/CN2023/102761
(87) International publication number: WO 2024/007895

(57) **Abstract**

A communication method and apparatus are provided, so that an access network device can configure an initial HFN and a reference SN for a terminal device in time when no data packet is received from a core network device. The method includes: A first core network device obtains an initial MBS QFI SN corresponding to a first MBS session, and sends the initial MBS QFI SN in a first procedure. The first procedure is a procedure before a multicast/broadcast user plane network element sends the l^{st} data packet of the first MBS session to an access network device. After receiving the initial MBS QFI SN in the first procedure, the access network device may determine an initial HFN and a reference SN based on the initial MBS QFI SN, and send the initial HFN and the reference SN to a terminal device.

## Description

This application claims priorities to Chinese Patent Application No. 202210785100.4, filed with the China National Intellectual Property Administration on July 5, 2022 and entitled "COMMUNICATION METHOD AND APPARATUS", and to Chinese Patent Application No. 202211167576.8, filed with the China National Intellectual Property Administration on September 23, 2022 and entitled "COMMUNICATION METHOD AND APPARATUS", both of which are incorporated herein by reference in their entireties.

### TECHNICAL FIELD

Embodiments of this application relate to the communication field, and in particular, to a communication method and apparatus.

### BACKGROUND

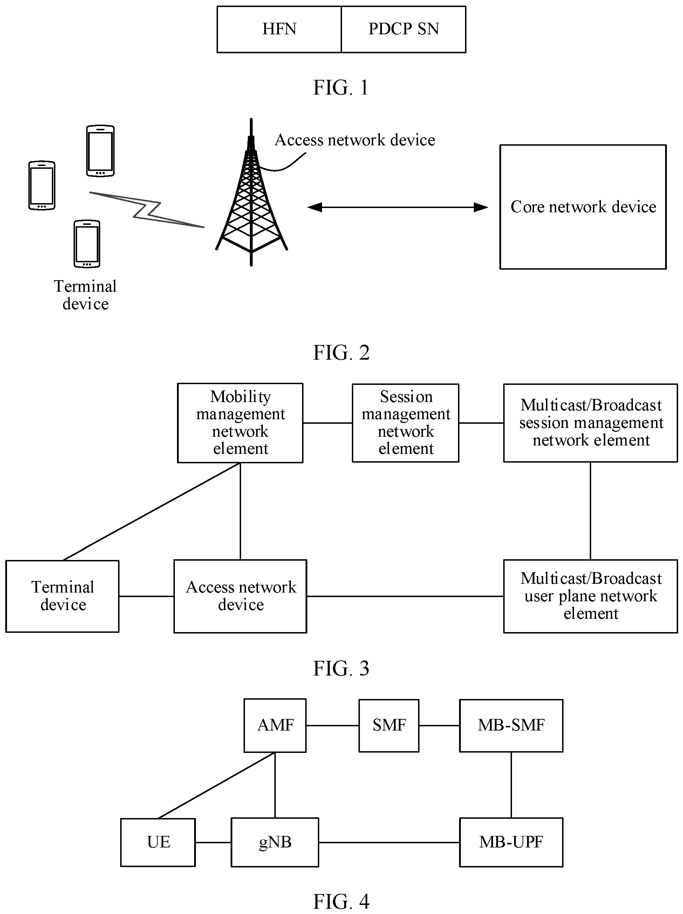

As shown in FIG. 1, a protocol data unit (protocol data unit, PDU) data (DATA) identifier (also referred to as a COUNT value) of a packet data convergence protocol (packet data convergence protocol, PDCP) layer is formed by a high-bit hyper frame number (hyper frame number, HFN) and a low-bit PDCP sequence number (sequence number, SN). Generally, a PDCP PDU sent by a transmitting end to a receiving end includes a PDCP SN, and an HFN is calculated by the receiving end.

For a multicast/broadcast service (multicast/broadcast service, MBS), to enable different access network devices to generate a same COUNT value for a same data packet of the service, a core network device generates an MBS quality of service (quality of service, QoS) flow (flow) identifier (QoS flow identifier, QFI) SN for each data packet of a QoS flow, so that the different access network devices generate the COUNT value based on the MBS QFI SN.

In addition, to synchronize COUNT values between a terminal device and an access network device, when configuring an MBS radio bearer (radio bearer, MRB), the access network device needs to indicate an initial COUNT value corresponding to the MRB to the terminal device, so that the terminal device determines a status variable of a PDCP window or a COUNT value of a subsequently received data packet based on the initial COUNT value.

However, when configuring the MRB, the access network device may not receive a data packet from the core network device. In this case, a problem of how the access network device indicates the initial COUNT value urgently needs to be resolved.

### SUMMARY

This application provides a communication method and apparatus, so that an access network device can configure an initial HFN and a reference SN for a terminal device in time when no data packet is received from a core network device.

According to a first aspect, a communication method is provided. The method may be performed by a first core network device, or may be performed by a component of the first core network device, for example, a processor, a chip, or a chip system of the first core network device, or may be implemented by a logical module or software that can implement all or some functions of the first core network device. The method includes: The first core network device obtains an initial MBS QFI SN corresponding to a first multicast/broadcast service MBS session, and sends the initial MBS QFI SN corresponding to the first MBS session to a network device in a first procedure. The initial MBS QFI SN corresponding to the first MBS session is used to determine an initial hyper frame number HFN and a reference SN. The first procedure is a procedure before the 1^{st} data packet of the first MBS session is sent to an access network device.

Based on this solution, before sending the 1^{st} data packet of the first MBS session to the access network device, the core network device may send the initial MBS QFI SN corresponding to the first MBS session, so that the access network device can determine the initial HFN and the reference SN based on the initial MBS QFI SN, and configure the initial HFN and the reference SN for a terminal device, and the access network device can configure an MRB for the terminal device in time without waiting for the data packet to arrive, to indicate the initial HFN and the reference SN. In addition, because the initial MBS QFI SN is a parameter provided by a core network side, the core network side may finally use the initial MBS QFI SN as an MBS QFI SN of the 1^{st} data packet, or determine an MBS QFI SN of the 1^{st} data packet based on the initial MBS QFI SN, so that accuracy of the initial HFN and the reference SN that are configured by the access network device before the data packet is received can be improved.

In a possible design, the initial MBS QFI SN corresponding to the first MBS session includes: an initial MBS QFI SN of the first MBS session and/or an initial MBS QFI SN of at least one QoS flow of the first MBS session.

Based on this possible design, the core network side can configure the initial MBS QFI SN by using an MBS session as a granularity and/or by using a QoS flow as a granularity. When the initial MBS QFI SN is configured by using a QoS flow as a granularity, different MBS QFI SNs may be configured for different QoS flows, and flexibility is high.

In a possible design, the initial MBS QFI SN corresponding to the first MBS session is less than or equal to a first MBS QFI SN, or a value obtained by subtracting the initial MBS QFI SN corresponding to the first MBS session from a first MBS QFI SN is less than or equal to a first value. The first MBS QFI SN is a preset MBS QFI SN of the 1^{st} data packet of the first MBS session. The first value is a nonnegative integer less than or equal to a PDCP window size.

Based on this possible design, when the first value is a nonnegative integer less than the PDCP window size, the initial MBS QFI SN corresponding to the first MBS session and the preset MBS QFI SN are located in one PDCP window size.

In a possible design, the method further includes: The first core network device sends the 1^{st} data packet of the first MBS session to the access network device, where the initial MBS QFI SN corresponding to the first MBS session is less than or equal to an MBS QFI SN of the 1^{st} data packet, or a value obtained by subtracting the initial MBS QFI SN corresponding to the first MBS session from an MBS QFI SN of the 1^{st} data packet is less than or equal to the first value, where the first value is the nonnegative integer less than or equal to the PDCP window size.

Based on this possible design, when the first value is a nonnegative integer less than the PDCP window size, an actual MBS QFI SN of the 1^{st} data packet and the initial MBS QFI SN corresponding to the first MBS session are located in one PDCP window size. Therefore, the initial HFN determined by the access network device, the initial COUNT value indicated by the reference SN, and the actual MBS QFI SN of the 1^{st} data packet are located in one PDCP window size, and the terminal device can accurately obtain a COUNT value of a subsequent data packet based on the initial COUNT value. In addition, the (actual) MBS QFI SN of the 1^{st} data packet, the preset MBS QFI SN, and the initial MBS QFI SN corresponding to the first MBS session are allowed to be unequal in a specific range, so that flexibility can be improved.

In a possible design, the first procedure is a shared transmission channel setup procedure, the shared transmission channel setup procedure is used to establish a shared transmission channel for the first MBS session, and the shared transmission channel is used for data transmission between a core network and an access network.

Based on this possible design, the core network side may send, in the shared transmission channel setup procedure, the initial MBS QFI SN corresponding to the first MBS session, thereby reducing a service delay caused by MRB delay configuration, and improving accuracy of the initial HFN and the reference SN that are configured by the access network device before the data packet is received. In addition, when the shared transmission channel setup procedure is executed, it indicates that the access network device triggers setup of the shared transmission channel with the core network, and the access network device needs to configure the MRB to send service data to the terminal device. Before the access network device receives the 1^{st} data packet from the core network through the transmission channel, the access network device cannot determine the initial HFN and the reference SN in the MRB configuration. When the initial MBS QFI SN is configured in the shared transmission channel setup procedure, because the access network device needs to configure the MRB, the access network device uses the initial MBS QFI SN to determine the initial HFN and the reference SN, thereby avoiding a case in which the core network configures the initial MBS QFI SN but the access network device does not use the initial MBS QFI SN, and avoiding a waste of communication resources.

In a possible design, that the first core network device sends the initial MBS QFI SN corresponding to the first MBS session to a network device includes: The first core network device sends a first message to the network device, where the first message includes the initial MBS QFI SN corresponding to the first MBS session. The first message is used to carry address information of the shared transmission channel and/or status information of the first MBS session.

In a possible design, the first procedure is a PDU session setup procedure or a PDU session modification procedure. The PDU session setup procedure is used to establish or modify the first MBS session, and the PDU session modification procedure is used to establish or modify the first MBS session.

Based on this possible design, the core network side may send, in the PDU session setup procedure or the PDU session modification procedure, the initial MBS QFI SN corresponding to the first MBS session, thereby reducing a service delay caused by MRB delay configuration, and improving accuracy of the initial HFN and the reference SN that are configured by the access network device before the data packet is received.

In a possible design, the first procedure is an MBS session update procedure. The MBS session update procedure is used to add a QoS flow to the first MBS session.

Based on this possible design, the core network side may send, in the MBS session update procedure, the initial MBS QFI SN corresponding to the first MBS session, thereby reducing a service delay caused by MRB delay configuration when the access network device needs to configure the MRB, and improving accuracy of the initial HFN and the reference SN that are configured by the access network device before the data packet is received.

In a possible design, the first procedure is a multicast session activation procedure. The multicast session activation procedure is used to activate the first MBS session.

Based on this possible design, the core network side may send, in the multicast session activation procedure, the initial MBS QFI SN corresponding to the first MBS session, thereby reducing a service delay caused by MRB delay configuration when the access network device needs to configure the MRB, and improving accuracy of the initial HFN and the reference SN that are configured by the access network device before the data packet is received.

In a possible design, that the first core network device sends the initial MBS QFI SN corresponding to the first MBS session to a network device includes: The first core network device sends a second message to the network device. The second message includes the initial MBS QFI SN corresponding to the first MBS session, and the second message is used to carry an identifier of the first MBS session.

In a possible design, the method further includes: The first core network device sends first information to the network device. The first information indicates whether an MBS QFI SN corresponding to the first MBS session is continuous or reset when the first MBS session is deactivated and then activated.

In a possible design, that the first core network device sends first information to the network device includes: The first core network device sends a third message to the network device, where the third message includes the first information. The third message is used to request to establish or modify the first MBS session; the third message is used to deactivate the first MBS session; the third message is used to activate the first MBS session; the third message is used to update the first MBS session; or the third message is used to establish the shared transmission channel for the first MBS session.

In a possible design, that the first core network device obtains an initial MBS QFI SN corresponding to a first MBS session includes: The first core network device receives, from a second core network device, the initial MBS QFI SN corresponding to the first MBS session.

In a possible design, the method further includes: The first core network device sends second information to the second core network device, where the second information is used to request the initial MBS QFI SN corresponding to the first MBS session.

In a possible design, the method further includes: The first core network device sends a fourth message to the second core network device, where the fourth message is used to request to establish or modify a packet forwarding control protocol PFCP session. That the first core network device receives, from a second core network device, the initial MBS QFI SN corresponding to the first MBS session includes: The first core network device receives a fifth message from the second core network device, where the fifth message includes the initial MBS QFI SN corresponding to the first MBS session, and the fifth message is a response message for the fourth message.

In a possible design, that the first core network device obtains an initial MBS QFI SN corresponding to a first MBS session includes: The first core network device receives the first MBS QFI SN from a second core network device, and determines, based on the first MBS QFI SN, the initial MBS QFI SN corresponding to the first MBS session. The first MBS QFI SN is the preset MBS QFI SN of the 1^{st} data packet.

In a possible design, the method further includes: The first core network device sends the initial MBS QFI SN corresponding to the first MBS session or the first MBS QFI SN to a second core network device, where the first MBS QFI SN is the preset MBS QFI SN of the 1^{st} data packet.

In a possible design, that the first core network device sends the initial MBS QFI SN corresponding to the first MBS session or the first MBS QFI SN to a second core network device includes: The first core network device sends a fourth message to the second core network device, where the fourth message is used to request to establish or modify a PFCP session, and the fourth message includes the initial MBS QFI SN corresponding to the first MBS session or the first MBS QFI SN. The method further includes: The first core network device receives a fifth message from the second core network device, where the fifth message is a response message for the fourth message; and when the fifth message indicates that the PFCP session is successfully established or modified, it indicates that the second core network device accepts the initial MBS QFI SN corresponding to the first MBS session or the first MBS QFI SN.

In a possible design, that the first core network device determines the initial MBS QFI SN corresponding to the first MBS session includes: The first core network device receives second information from a second core network device, where the second information is used to request the initial MBS QFI SN corresponding to the first MBS session. The first core network device determines, based on the second information, the initial MBS QFI SN corresponding to the first MBS session.

In a possible design, that the first core network device determines the initial MBS QFI SN corresponding to the first MBS session includes: The first core network device receives a fourth message from a second core network device, where the fourth message is used to request to establish or modify a PFCP session. The first core network device determines, based on the fourth message, the initial MBS QFI SN corresponding to the first MBS session.

According to a second aspect, a communication method is provided. The method may be performed by an access network device, or may be performed by a component of the access network device, for example, a processor, a chip, or a chip system of the access network device, or may be implemented by a logical module or software that can implement all or some functions of the access network device. The method includes: The access network device receives, from a session management network element in a first procedure, an initial MBS QFI SN corresponding to a first multicast/broadcast service MBS session, where the first procedure is a procedure before the access network device receives the 1^{st} data packet of the first MBS session. The access network device determines an initial hyper frame number HFN and a reference SN based on the initial MBS QFI SN of the first MBS session, and sends the initial HFN and the reference SN to a terminal device.

Based on this solution, before receiving the 1^{st} data packet of the first MBS session, the access network device may receive, from a core network side, the initial MBS QFI SN corresponding to the first MBS session, so that the access network device can determine the initial HFN and the reference SN based on the initial MBS QFI SN, and configure the initial HFN and the reference SN for the terminal device, and the access network device can configure an MRB for the terminal device in time without waiting for the data packet to arrive, to indicate the initial HFN and the reference SN. In addition, because the initial MBS QFI SN is a parameter provided by the core network side, the core network side may finally use the initial MBS QFI SN as an MBS QFI SN of the 1^{st} data packet, or determine an MBS QFI SN of the 1^{st} data packet based on the initial MBS QFI SN, so that accuracy of the initial HFN and the reference SN that are configured by the access network device before the data packet is received can be improved.

In a possible design, the first procedure is a shared transmission channel setup procedure, the shared transmission channel setup procedure is used to establish a shared transmission channel for the first MBS session, and the shared transmission channel is used for data transmission between a core network and an access network.

In a possible design, that the access network device receives, from a session management network element, an initial MBS QFI SN corresponding to a first MBS session includes: The access network device receives a first message from the session management network element, where the first message includes the initial MBS QFI SN corresponding to the first MBS session, and the first message is used to carry address information of the shared transmission channel and/or status information of the first MBS session.

In a possible design, the first procedure is a PDU session setup procedure or a PDU session modification procedure, the PDU session setup procedure is used to establish or modify the first MBS session, and the PDU session modification procedure is used to establish or modify the first MBS session.

In a possible design, the first procedure is an MBS session update procedure, and the MBS session update procedure is used to add a QoS flow to the first MBS session.

In a possible design, the first procedure is a multicast session activation procedure, and the multicast session activation procedure is used to activate the first MBS session.

In a possible design, that the access network device receives, from a session management network element, an initial MBS QFI SN corresponding to a first MBS session includes: The access network device receives a second message from the session management network element, where the second message includes the initial MBS QFI SN corresponding to the first MBS session, and the second message is used to carry an identifier of the first MBS session.

For technical effects brought by any possible design of the second aspect, refer to technical effects brought by corresponding designs of the first aspect. Details are not described herein again.

According to a third aspect, a communication method is provided. The method may be performed by a first core network device, or may be performed by a component of the first core network device, for example, a processor, a chip, or a chip system of the first core network device, or may be implemented by a logical module or software that can implement all or some functions of the first core network device. The method includes: The first core network device obtains first information, and sends the first information to a network device. The first information indicates whether an MBS quality of service flow identifier QFI sequence number SN of a first multicast/broadcast service MBS session is continuous or reset when the first MBS session is deactivated and then activated.

Based on this solution, it is assumed that the first information indicates that the MBS QFI SN corresponding to the first MBS session is discontinuous or reset when the first MBS session is deactivated and then activated. In this case, an access network device can release an MRB of the first MBS session when receiving a deactivation request of the first MBS session, so that the access network device can release the MRB as early as possible. Alternatively, an access network device can release an MRB of the first MBS session and then newly establish an MRB when receiving an activation request of the first MBS session, so that the access network device can establish the MRB before the MBS session is activated. Compared with activating the MBS session and then establishing the MRB, a service delay can be reduced.

In a possible design, that the first core network device sends the first information to a network device includes: The first core network device sends a third message to the network device, where the third message includes the first information. The third message is used to request to establish or modify the first MBS session; the third message is used to deactivate the first MBS session; the third message is used to activate the first MBS session; the third message is used to update the first MBS session; or the third message is used to establish the shared transmission channel for the first MBS session.

In a possible design, the method further includes: The first core network device sends the initial MBS QFI SN of the first MBS session to the network device in a first procedure. The initial MBS QFI SN corresponding to the first MBS session is used to determine an initial hyper frame number HFN and a reference SN. The first procedure is a procedure before the 1^{st} data packet of the first MBS session is sent to an access network device.

Based on this possible design, the access network device can configure an MRB for a terminal device based on the initial MBS QFI SN of the first MBS session, thereby improving accuracy of the initial HFN and the reference SN that are configured by the access network device.

According to a fourth aspect, a communication apparatus is provided, to implement the foregoing methods. The communication apparatus may be the first core network device in the first aspect or the third aspect, or an apparatus included in the first core network device, for example, a chip, a chip system, or a module; or the communication apparatus may be the access network device in the second aspect, or an apparatus included in the access network device, for example, a chip, a chip system, or a module. The communication apparatus includes corresponding modules, units, or means (means) for implementing the methods. The modules, units, or means may be implemented by hardware, software, or hardware executing corresponding software. The hardware or the software includes one or more modules or units corresponding to the functions.

In some possible designs, the communication apparatus may include a processing module and a transceiver module. The processing module may be configured to implement a processing function in any one of the foregoing aspects and any one of the possible implementations thereof. The transceiver module may also be referred to as a transceiver unit, and is configured to implement a sending function and/or a receiving function in any one of the foregoing aspects and any one of the possible implementations thereof. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any one of the possible implementations thereof.

According to a fifth aspect, a communication apparatus is provided, including a processor and a communication interface. The communication interface is configured to communicate with a module outside the communication apparatus, and the processor is configured to execute a computer program or instructions, to enable the communication apparatus to perform the method in any one of the foregoing aspects. The communication apparatus may be the first core network device in the first aspect or the third aspect, or an apparatus included in the first core network device, for example, a chip, a chip system, or a module; or the communication apparatus may be the access network device in the second aspect, or an apparatus included in the access network device, for example, a chip, a chip system, or a module.

According to a sixth aspect, a communication apparatus is provided, including at least one processor. The processor is configured to execute a computer program or instructions stored in a memory, so that the communication apparatus performs the method in any one of the foregoing aspects. The memory may be coupled to the processor, or the memory may be independent of the processor. For example, the memory and the processor are two independent modules. The memory may be located outside the communication apparatus, or may be located inside the communication apparatus. The communication apparatus may be the first core network device in the first aspect or the third aspect, or an apparatus included in the first core network device, for example, a chip, a chip system, or a module; or the communication apparatus may be the access network device in the second aspect, or an apparatus included in the access network device, for example, a chip, a chip system, or a module. When the apparatus is the chip system, the apparatus may include a chip, or may include a chip and another discrete component.

According to a seventh aspect, a computer-readable storage medium is provided. The computer-readable storage medium stores a computer program or instructions. When the computer program or the instructions are executed on a communication apparatus, the communication apparatus is enabled to perform the method in any one of the foregoing aspects.

According to an eighth aspect, a computer program product including instructions is provided. When the computer program product is run on a communication apparatus, the communication apparatus is enabled to perform the method in any one of the foregoing aspects.

It may be understood that, when the communication apparatus provided in any one of the fourth aspect to the eighth aspect is a chip, the sending action/function may be understood as outputting information, and the receiving action/function may be understood as inputting information.

For technical effects brought by any design manner in the fourth aspect to the eighth aspect, refer to technical effects brought by different design manners in the first aspect, the second aspect, or the third aspect. Details are not described herein again.

### BRIEF DESCRIPTION OF DRAWINGS

FIG. 1 is a diagram of a structure of COUNT according to this application;
FIG. 2 is a diagram of a structure of a communication system according to this application;
FIG. 3 is a diagram of a structure of another communication system according to this application;
FIG. 4 is a diagram of a structure of still another communication system according to this application;
FIG. 5 is a diagram of a structure of a communication apparatus according to this application;
FIG. 6 is a diagram of a transmission path of an MBS according to this application;
FIG. 7 is a diagram of a structure of a user plane protocol stack according to this application;
FIG. 8 is a diagram of a multicast session setup procedure according to this application;
FIG. 9 is a diagram of an MBS session deactivation procedure according to this application;
FIG. 10 is a diagram of an MBS session activation procedure according to this application;
FIG. 11 is a schematic flowchart of a communication method according to this application;
FIG. 12 is a schematic flowchart of another communication method according to this application;
FIG. 13 is a schematic flowchart of still another communication method according to this application;
FIG. 14 is a diagram 1 of an application procedure of a communication method according to this application;
FIG. 15 is a diagram 2 of an application procedure of a communication method according to this application;
FIG. 16 is a diagram 3 of an application procedure of a communication method according to this application;
FIG. 17 is a diagram 4 of an application procedure of a communication method according to this application;
FIG. 18a is a schematic flowchart of yet another communication method according to this application;
FIG. 18b is a schematic flowchart of yet another communication method according to this application;
FIG. 19 is a diagram of a structure of a first core network device according to this application;
FIG. 20 is a diagram of a structure of an access network device according to this application;
FIG. 21 is a diagram of a structure of another communication apparatus according to this application; and
FIG. 22 is a schematic flowchart of yet another communication method according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that "embodiments" mentioned in the specification mean that particular features, structures, or characteristics related to embodiments are included in at least one embodiment of this application. Therefore, embodiments in the specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects; or in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, reference may be made to each other. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE-NR hybrid networking system, a device-to-device (device-to-device, D2D) system, a machine-to-machine (machine-to-machine, M2M) communication system, internet of things (Internet of Things, IoT), another next-generation communication system, and the like. Alternatively, the communication system may be a non-3GPP communication system. This is not limited.

The communication system applicable to this application is merely an example for description, and the communication system applicable to this application is not limited thereto. This is uniformly described herein, and details are not described below again.

FIG. 2 shows an example of a communication system according to this application. The communication system includes an access network device and at least one terminal device. Further, the communication system may further include a core network device.

Optionally, as shown in FIG. 3, the core network device may include at least one of a mobility management network element, a session management network element, a multicast/broadcast session management network element, or a multicast/broadcast user plane network element.

Optionally, the terminal device may access a data network (data network, DN) or perform service data transmission by using a protocol data unit (protocol data unit, PDU) session (PDU session) from the terminal device to the access network device to the core network device to the DN.

Optionally, the terminal device may be a user-side device that has a wireless transceiver function. The terminal device may also be referred to as user equipment (user equipment, UE), a terminal, or the like. For example, the terminal device may be an unmanned aerial vehicle, an IoT device (for example, a sensor, an electricity meter, or a water meter), a V2X device, a station (station, ST) in a wireless local area network (wireless local area network, WLAN), a personal digital assistant (personal digital assistant, PDA) device, a handheld device having a wireless communication function, a computing device or another processing device connected to a wireless modem, an in-vehicle device, a wearable device (which may also be referred to as a wearable intelligent device), or a tablet computer or a computer having a wireless transceiver function; or may be a virtual reality (virtual reality, VR) terminal, or a wireless terminal in industrial control (industrial control), self-driving (self-driving), telemedicine (remote medical), smart grid (smart grid), transportation safety (transportation safety), smart city (smart city), or smart home (smart home); or may be an in-vehicle terminal, a vehicle having a vehicle-to-vehicle (vehicle-to-vehicle, V2V) communication capability, an intelligent connected vehicle, an unmanned aerial vehicle with a UAV-to-UAV (UAV-to-UAV, U2U) communication capability, or the like.

Optionally, the access network device is a network-side device having a wireless transceiver function, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device that implements a base station function in IoT, V2X, D2D, or M2M.

Optionally, in specific implementation, the access network device may be a central unit (central unit, CU), or the access network device may include a CU and a distributed unit (distributed unit, DU). The CU and the DU may be divided based on protocol layers of a wireless network. For example, functions of a radio resource control (radio resource control, RRC) protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that division into processing functions of the CU and the DU based on the protocol layers is merely an example, and division may alternatively be performed in another manner. This is not specifically limited in embodiments of this application.

In some embodiments, the CU may include a CU control plane (CU control plane, CU-CP) and a CU user plane (CU user plane, CU-UP).

Optionally, the mobility management network element is mainly configured to perform attachment, mobility management, a tracking area update procedure, and the like of the terminal device in the mobile network. The mobility management network element terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element. In a 5G communication system, the mobility management network element may be an access and mobility management function (access and mobility management function, AMF) network element. In future communication such as 6th generation (6th generation, 6G) communication, the mobility management network element may still be an AMF network element or have another name. This is not limited in embodiments of this application.

Optionally, the session management network element is mainly responsible for session management in a mobile network, for example, management session establishment, modification, and release. In the 5G communication system, the session management network element may be a session management function (session management function, SMF) network element. In future communication (such as 6G communication), the session management network element may still be an SMF network element or have another name. This is not limited in embodiments of this application.

Optionally, the multicast/broadcast session management network element is mainly responsible for session management of a multicast/broadcast service (multicast/broadcast service, MBS) in a mobile network. In the 5G communication system, the multicast/broadcast session management network element may be a multicast/broadcast (multicast/broadcast, MB) SMF network element, namely, an MB-SMF network element. In future communication (such as 6G communication), the multicast/broadcast session management network element may still be an MB-SMF network element or have another name. This is not limited in embodiments of this application.

Optionally, the session management network element in this application may also participate in an MBS-related procedure such as session management of an MBS.

Optionally, the multicast/broadcast user plane network element is mainly responsible for processing a packet of the MBS, for example, forwarding and charging. In the 5G communication system, the multicast/broadcast user plane network element may be an MB user plane function (user plane function, UPF) network element, namely, an MB-UPF network element. In future communication (such as 6G communication), the multicast/broadcast user plane network element may still be an MB-UPF network element or have another name. This is not limited in embodiments of this application.

Optionally, a function of the multicast/broadcast user plane network element in this application may also be implemented by a user plane network element. In other words, the multicast/broadcast user plane network element in this application may be replaced with the user plane network element.

Using the 5G communication system as an example, a possible network architecture corresponding to the communication system shown in FIG. 3 used in embodiments of this application may be shown in FIG. 4.

It should be noted that a communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Functions related to the terminal device, the access network device, and the core network device in this application may be implemented by one device, may be jointly implemented by a plurality of devices, may be implemented by one or more functional modules in one device, or may be implemented by one or more chips, a system-on-chip (system on chip, SoC) or a chip system. The chip system may include a chip, or may include a chip and another discrete component. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

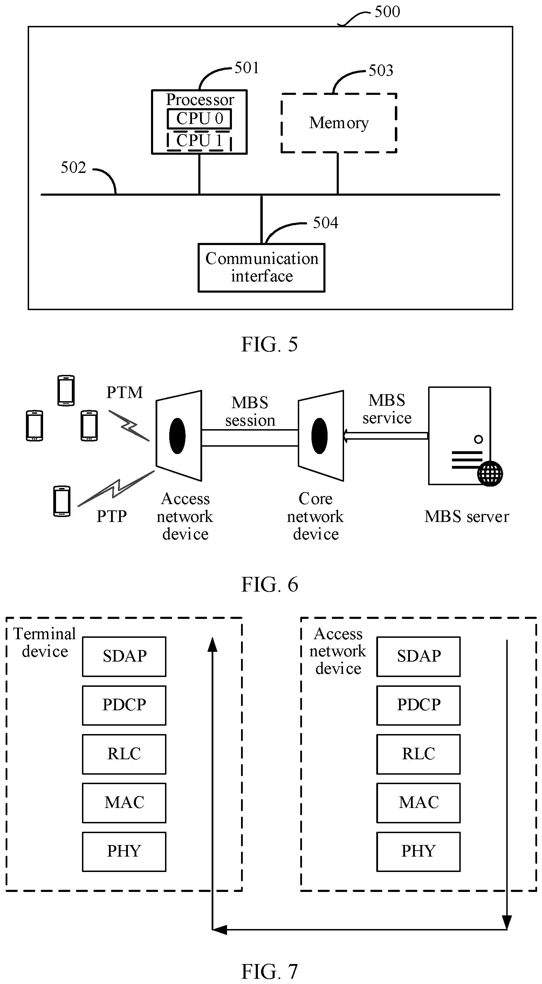

For example, the terminal device, the access network device, and the core network device in this application may be implemented by a communication device 500 in FIG. 5. FIG. 5 is a composition diagram of a communication apparatus 500 according to this application. The communication apparatus 500 may be a terminal device, or a chip or a system on chip in the terminal device; or may be an access network device, or a module, a chip, or a system on chip in the access network device; or may be a core network device, or a module, a chip, or a system on chip in the core network device.

As shown in FIG. 5, the communication apparatus 500 includes at least one processor 501 and at least one communication interface (in FIG. 5, only an example in which one communication interface 504 and one processor 501 are included is used for description). Optionally, the communication apparatus 500 may further include a communication bus 502 and a memory 503.

The processor 501 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module. This is not limited.

The communication bus 502 is configured to connect different components in the communication apparatus 500, so that the different components can communicate with each other. The communication bus 502 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 5, but it does not indicate that there is only one bus or only one type of bus.

The communication interface 504 is configured to communicate with another device or a communication network. For example, the communication interface 504 may be a module, a circuit, a transceiver, or any apparatus that can implement communication. Optionally, the communication interface 504 may be an input/output interface located in the processor 501, and is configured to implement signal input and signal output of the processor.

The memory 503 may be an apparatus having a storage function, and is configured to store instructions and/or data. The instructions may be a computer program.

For example, the memory 503 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, or the like), a magnetic disk storage medium or another magnetic storage device, or the like. This is not limited.

It should be noted that the memory 503 may be independent of the processor 501, or may be integrated with the processor 501. The memory 503 may be located inside the communication apparatus 500, or may be located outside the communication apparatus 500. This is not limited. The processor 501 may be configured to execute the instructions stored in the memory 503, to implement a method provided in the following embodiment of this application.

In an optional implementation, the communication apparatus 500 may further include an output device and an input device (not shown in FIG. 5). The output device communicates with the processor 501, and may display information in a plurality of manners. The input device communicates with the processor 501, and may receive a user input in a plurality of manners.

It should be noted that the structure shown in FIG. 5 does not constitute a specific limitation on the access network device, the core network device, or the terminal device. For example, in some other embodiments of this application, the access network device, the core network device, or the terminal device may include more or fewer components than those shown in the figure, or combine some components, or split some components, or have different component arrangements. The components shown in the figure may be implemented by hardware, software, or a combination of software and hardware.

For ease of understanding of the technical solutions in embodiments of this application, technologies related to this application are first briefly described as follows.

### 1. Multicast/Broadcast service MBS:

The MBS is a service oriented to a plurality of terminal devices. Common MBS services include a live streaming service, a public security service, a batch software update service, and the like. From the perspective of end-to-end management and control process and transmission mode, the MBS can be classified into a multicast (multicast) service and a broadcast (broadcast) service.

It should be noted that, in this application, services that can be classified into multicast services and broadcast services are collectively referred to as an MBS only as an example. A name of the MBS is not specifically limited in this application. With evolution of wireless communication technologies, the MBS may have another name.

The multicast service has a high requirement for quality of service (quality of service, QoS). The multicast service can reach a same QoS level as a unicast service. Generally, operations such as group management may be performed on the multicast service. For example, the core network device may manage the terminal device to join or leave a multicast service group, and the access network device and the core network device may maintain information about the terminal device in the multicast service group.

As shown in FIG. 6, an MBS server may send data of the MBS to the core network device. The multicast service is transmitted between the core network device and the access network device by using an MBS session, and the MBS session includes an MBS QoS flow (or referred to as a multicast QoS flow (multicast QoS flow)). The MBS session may be associated with a PDU session of the terminal device, and the MBS QoS flow is associated with a unicast QoS flow in the PDU session. The core network device may control a status of the MBS session to be an active state or an inactive state, and the terminal device does not sense the status of the MBS session.

The access network device may send the multicast service to the terminal device in a point-to-multipoint (point-to-multipoint, PTM) or point-to-point (point-to-point, PTP) transmission mode.

It should be noted that the MBS session in this application may also be referred to as a multicast (multicast) session, and the two may be replaced with each other. In addition, MBS sessions may be in one-to-one correspondence with MBSs. A specific MBS and an MBS session corresponding to the MBS may be represented by using a same identifier. For example, both the MBS and the MBS session may be identified by using a temporary multicast group identity (temporary multicast group identifier, TMGI). Therefore, the MBS session and the MBS in this application may also be replaced with each other.

### 2. Protocol stack on a radio access network side:

The protocol stack on the radio access network side may be classified into a user plane protocol stack and a control plane protocol stack. The user plane protocol stack may include a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical (physical, PHY) layer, and the like. The physical layer belongs to a first layer (also referred to as a layer 1 (layer 1, L1)), and the MAC layer, the RLC layer, the PDCP layer, and the SDAP layer belong to a second layer (also referred to as a layer 2 (layer 2, L2)). In addition, a radio resource control (radio resource control, RRC) layer of a control plane belongs to a third layer (also referred to as a layer 3 (layer 3, L3)).

As shown in FIG. 7, in the user plane protocol stack of the MBS, the SDAP layer is located above the PDCP layer, the PDCP layer is located above the RLC layer, the RLC layer is located above the MAC layer, and the MAC layer is located above the physical layer. For the MBS, after data arrives at the access network device, the protocol layers sequentially process a data packet in a top-down order shown in FIG. 7, and finally transmit the data packet to the terminal device through an air interface. After receiving the data packet on the air interface, the terminal device sequentially performs corresponding processing on the data packet in a sequence opposite to that of the access network device. Processing of the data packet at each protocol layer is implemented by a multi-functional entity corresponding to the protocol layer. For example, processing of the PDCP layer is implemented by a corresponding PDCP layer entity.

Generally, a service that is provided by the layer 2 and that is used to transmit user data between the terminal device and the access network device may be referred to as a radio bearer (radio bearer, RB). For the MBS, the service that is provided by the layer 2 and that is used to transmit the user data between the terminal device and the access network device may be referred to as an MRB. For example, the service for transmitting the user data between the terminal device and the access network device may be implemented by the foregoing protocol layers that belong to the layer 2.

It should be noted that the user plane protocol stack shown in FIG. 7 constitutes no limitation on the solutions of this application. In actual application, the user plane protocol stack may include more or fewer protocol layers than those shown in the figure.

### 3. Multicast service setup:

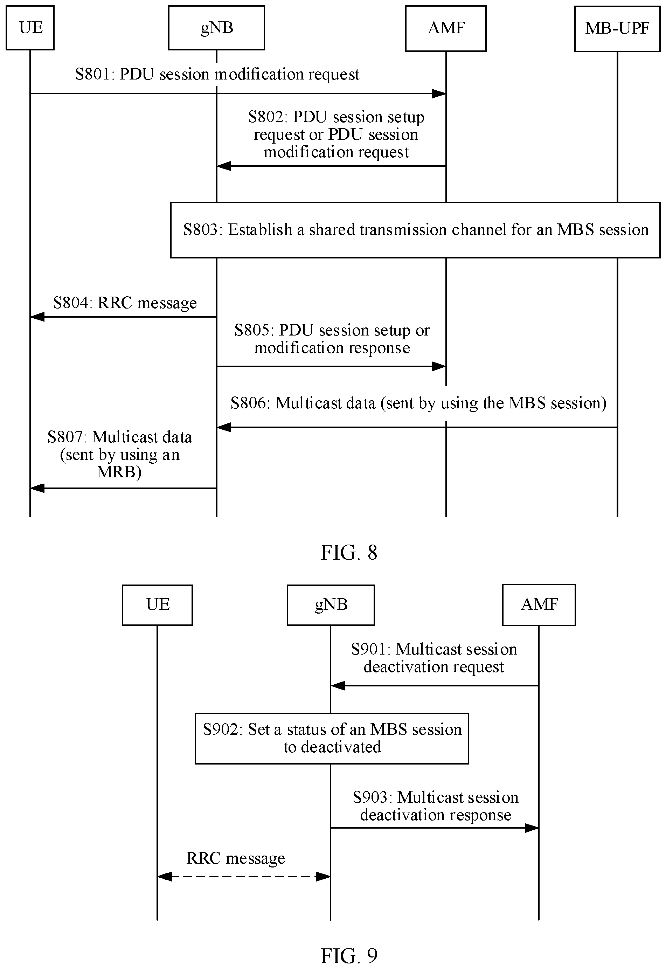

For example, a 5G system is used as an example. As shown in FIG. 8, a multicast service setup procedure may include the following steps.

S801: UE sends a PDU session modification request (PDU Session Modification Request) message to an AMF network element. Correspondingly, the AMF network element receives the PDU session modification request message from the UE.

The PDU session modification request message may include an identifier (identifier, ID) of an MBS session, for example, a TMGI, to indicate a multicast group that the UE requests to join.

The PDU session modification request message is a NAS message. After receiving the PDU session modification request message, the AMF network element may send the PDU session modification request message to an SMF network element.

S802: The AMF network element sends a PDU session setup request (PDU Session Setup Request) message or the PDU session modification request (PDU Session Modification Request) message to a gNB. Correspondingly, the gNB receives the PDU session setup request message or the PDU session modification request message from the AMF network element.

For example, the PDU session setup request message or the PDU session modification request message may include multicast session information and PDU session modification information. For example, the multicast session information may include related information of the MBS session (or the multicast group) that the UE requests to join. The PDU session modification information may indicate a PDU session associated with the MBS session, a unicast QoS flow associated with a QoS flow of the MBS session, and the like.

Optionally, the multicast session information and the PDU session modification information may be generated by the SMF network element and sent to the AMF network element.

After the gNB receives the PDU session setup request message or the PDU session modification request message, if a shared transmission channel for the MBS session that the UE requests to join is not established, the gNB performs step S803.

S803: Establish the shared transmission channel for the MBS session. For example, the shared transmission channel is used for data transmission between a core network and an access network.

Optionally, a network element in step S803 may include the gNB, the AMF network element, the SMF network element, an MB-SMF network element, an MB-UPF network element, or the like. For ease of description, FIG. 8 shows only the gNB, the AMF network element, and the MB-UPF network element. However, it is not limited that network elements participating in step S803 are only the gNB, the AMF network element, and the MB-UPF network element.

S804: The gNB sends an RRC message to the UE.

For example, the RRC message may include an N1 session management (session management, SM) container (container) (for example, a PDU session modification command (PDU Session Modification Command)) and MRB configuration information (used to establish an MRB for the MBS session).

For example, the PDU session modification command may be generated by the AMF network element and sent to the UE via the gNB.

S805: The gNB sends a PDU session setup response (PDU Session Setup Response) message or a PDU session modification response (PDU Session Modification Response) message to the AMF network element. Correspondingly, the AMF network element receives the PDU session setup response message or the PDU session modification response message from the gNB.

For example, the PDU session setup response message or the PDU session modification response message may be used to reply to a multicast service setup status, for example, reply to a multicast service setup success.

S806: The MB-UPF network element sends multicast data to the gNB by using the MBS session. Correspondingly, the gNB receives the multicast data from the MB-UPF network element.

S807: The gNB sends the multicast data to the UE by using the MRB. Correspondingly, the UE receives the multicast data from the gNB.

It should be noted that FIG. 8 shows only some steps in a multicast service session setup procedure and implementation of some core network devices (for example, the AMF network element). In actual implementation, the multicast service session setup procedure may involve more network elements than those shown in FIG. 8, and include more steps than those shown in FIG. 8.

### 4. MBS session deactivation (deactivation):

For example, a 5G system is used as an example. As shown in FIG. 9, an MBS session activation procedure may include the following steps.

S901: An AMF network element sends a multicast session deactivation request (Multicast Session Deactivation Request) message to a gNB. Correspondingly, the gNB receives the multicast session deactivation request message from the AMF network element.

Optionally, the MBS session deactivation procedure may be triggered by an MB-SMF network element. For example, when receiving a deactivation request from an application function (application function, AF) network element or receiving a notification from an MB-UPF network element (the MB-UPF network element notifies that there is no downlink data transmission in a period of time), the MB-SMF network element may trigger the MBS session deactivation procedure, and send the deactivation request to the AMF network element, so that the AMF network element performs step S901.

S902: The gNB sets a status of an MBS session to deactivated.

S903: The gNB sends a multicast session deactivation response (Multicast Session Deactivation Response) message to the AMF network element. Correspondingly, the AMF network element receives the multicast session deactivation response message from the gNB.

For example, the multicast session deactivation response message may reply to an MBS session deactivation status, for example, reply to an MBS session deactivation success.

Optionally, after receiving the multicast session deactivation response message, the AMF network element may send a response message to the MB-SMF network element to reply to the MBS session deactivation status.

Optionally, after deactivating the MBS session, the gNB stops transmitting data of the MBS session to UE. The gNB may further release a UE connection. For example, the UE connection may be released by using an RRC message. Alternatively, the gNB may not release the UE connection. In addition, the UE is unaware of MBS session deactivation, and a network side does not explicitly send a deactivation notification to the UE.

It should be noted that FIG. 9 shows only some steps in the MBS session deactivation procedure and implementation of some core network devices (for example, the AMF network element). In actual implementation, the MBS session deactivation procedure may involve more network elements than those shown in FIG. 9, and include more steps than those shown in FIG. 9.

### 5. MBS session activation (activation):

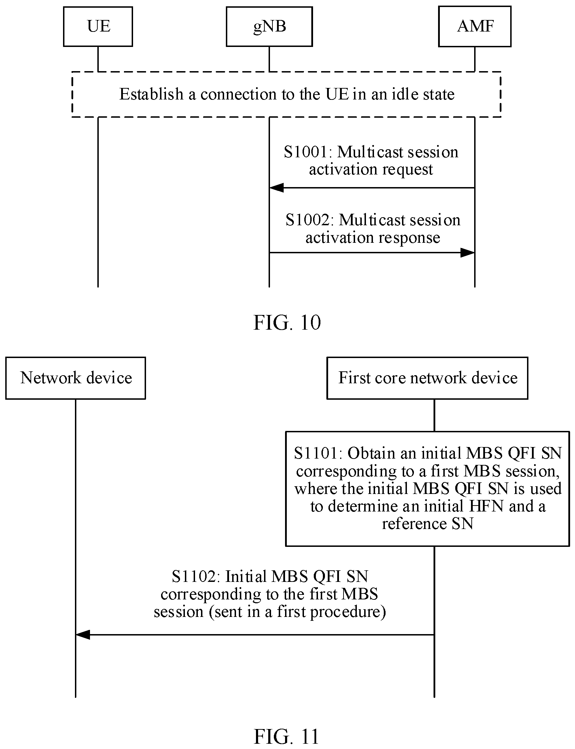

For example, a 5G system is used as an example. As shown in FIG. 10, an MBS session activation procedure may include the following steps.

S1001: An AMF network element sends a multicast session activation request (Multicast Session Activation Request) message to a gNB. Correspondingly, the gNB receives the multicast session activation request message from the AMF network element.

Optionally, the MBS session activation procedure may be triggered by an MB-SMF network element. For example, when receiving an activation request from an application function (application function, AF) network element or receiving a notification (a notification about downlink MBS data) from an MB-UPF network element, the MB-SMF network element may trigger the MBS session activation procedure, and send the activation request to the AMF network element, so that the AMF network element performs step S1001.

Optionally, when the MB-SMF network element triggers the MBS session activation procedure, UE joining an MBS session is paged. If UE is in an RRC idle state, before step S1001, a connection may be first re-established (for example, a PDU session is established) for the UE. For example, the re-establishing a connection for the UE may include: The AMF network element sends a PDU session setup request message to the gNB.

S1002: The gNB sends a multicast session activation response (Multicast Session Activation Response) message to the AMF network element. Correspondingly, the AMF network element receives the multicast session activation response message from the gNB.

For example, the multicast session activation response message may reply to an MBS session activation status, for example, reply to an MBS session activation success.

Optionally, after receiving the multicast session activation response message, the AMF network element may send a response message to the MB-SMF network element to reply to the MBS session activation status.

Optionally, after activating the MBS session, the gNB may transmit data of the MBS session to UE.

It should be noted that FIG. 10 shows only some steps in the MBS session activation procedure and implementation of some core network devices (for example, the AMF network element). In actual implementation, the MBS session activation procedure may involve more network elements than those shown in FIG. 10, and include more steps than those shown in FIG. 10.

For a multicast service, to enable different access network devices participating in transmission of the multicast service to generate a same COUNT value for a same data packet of the multicast service, the core network device may generate an MBS QFI SN for the data packet of the multicast service. After receiving the data packet from the core network, each access network device may generate the same COUNT value based on the MBS QFI SN of the data packet. A QFI is a QoS flow identifier (QoS flow identifier, QFI), and an SN is a sequence number (sequence number, SN).

It should be noted that the COUNT value in this application is a PDCP layer COUNT value. A structure of the COUNT value is shown in FIG. 1, and includes a high-bit hyper frame number (hyper frame number, HFN) and a low-bit PDCP SN. In addition, the "COUNT value" in this application may also be referred to as (or described as) "COUNT", and the two may be replaced with each other.

In addition, for a multicast service, terminal devices that successively join a same multicast service correspond to a same MRB on an access network device side. To synchronize COUNT values between the access network device and the terminal devices that join the same multicast service at different time, when the access network device creates or configures an MRB for the terminal device, the access network device needs to indicate an initial COUNT value to the terminal device. For example, the access network device needs to indicate the initial COUNT value to the terminal device in a PDCP configuration by using a multicastHFN-AndRefSN information element.

However, when configuring the MRB, the access network device may not receive the data packet from the core network device. However, a protocol stipulates that the access network device needs to indicate the initial COUNT value when configuring the MRB for the terminal device. In this case, how the access network device configures the MRB to indicate the initial COUNT value is a problem that needs to be urgently resolved.

Based on this, this application provides a communication method, so that an access network device can still indicate an initial COUNT value to a terminal device in time when no data packet is received from a core network.

With reference to the accompanying drawings, the following describes in detail the method provided in embodiments of this application by using interaction between the access network device, the core network device, and the terminal device shown in FIG. 2 as an example.

It may be understood that an execution body may perform some or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

It should be noted that names of devices, names of messages between devices, names of parameters in messages, and the like in the following embodiments of this application are merely examples, and may have other names during implementation. This is not specifically limited in embodiments of this application.

FIG. 11 shows a communication method according to an embodiment of this application. The communication method includes the following steps.

S1101: A first core network device obtains an initial MBS QFI SN corresponding to a first MBS session. The initial MBS QFI SN corresponding to the first MBS session is used to determine an initial HFN and a reference SN.

Optionally, the initial MBS QFI SN in this application is essentially a sequence number or a number. In other words, step S1101 may be: The first core network device obtains the sequence number or the number corresponding to the first MBS session. The initial MBS QFI SN is merely an example of a name of the sequence number or the number obtained by the first core network device in step S1101. A name of the sequence number or the number is not specifically limited in this application.

Optionally, the initial MBS QFI SN is not specific to a specific data packet, that is, the initial MBS QFI SN is not an MBS QFI SN of a data packet. Certainly, an MBS QFI SN of a data packet may be the same as the initial MBS QFI SN.

Optionally, the first core network device may be a mobility management network element, a session management network element, a multicast/broadcast session management network element, or a multicast/broadcast user plane network element.

Optionally, the initial MBS QFI SN corresponding to the first MBS session may be at a QoS flow granularity. For example, the initial MBS QFI SN corresponding to the first MBS session includes an initial MBS QFI SN of at least one QoS flow of the first MBS session. For example, the first MBS session includes a QoS flow 1 (identified by a QFI 1), a QoS flow 2 (identified by a QFI 2), and a QoS flow 3 (identified by a QFI 3). The initial MBS QFI SN corresponding to the first MBS session may include at least one of an initial MBS QFI SN of the QoS flow 1, an initial MBS QFI SN of the QoS flow 2, or an initial MBS QFI SN of the QoS flow 3.

Alternatively, the initial MBS QFI SN corresponding to the first MBS session may be at an MBS session granularity. For example, the initial MBS QFI SN corresponding to the first MBS session includes an initial MBS QFI SN of the first MBS session. If the first MBS session includes a plurality of QoS flows, the initial MBS QFI SN of the first MBS session may be a sum of initial MBS QFI SNs of the plurality of QoS flows. Alternatively, an initial MBS QFI SN of each QoS flow of the first MBS session may be the initial MBS QFI SN of the first MBS session. In other words, the initial MBS QFI SNs of the QoS flows may be the same. If the first MBS session includes only one QoS flow, the initial MBS QFI SN of the first MBS session is an initial MBS QFI SN of the QoS flow.

S1102: The first core network device sends the initial MBS QFI SN corresponding to the first MBS session to a network device in a first procedure. Correspondingly, the network device receives, from the first core network device in the first procedure, the initial MBS QFI SN corresponding to the first MBS session.

Optionally, if the first core network device is a mobility management network element, the network device may be an access network device.

Alternatively, if the first core network device is a session management network element, the network device may be a mobility management network element.

Alternatively, if the first core network device is a multicast/broadcast session management network element, the network device may be a mobility management network element or a session management network element.

Alternatively, if the first core network device is a multicast/broadcast user plane network element, the network device may be a multicast/broadcast session management network element or a session management network element.

The first procedure is a procedure before the 1^{st} data packet of the first MBS session is sent to the access network device. Specifically, the first procedure may be a procedure before the multicast/broadcast user plane network element sends the 1^{st} data packet of the first MBS session to the access network device, that is, the first procedure is a procedure before step S1105. For the access network device, the first procedure is a procedure before the 1^{st} data packet of the first MB S session is received. Specifically, the first procedure may be a procedure before the 1^{st} data packet of the first MBS session is received from the multicast/broadcast user plane network element.

Optionally, the first procedure may also be understood as a procedure used to prepare data transmission of the first MBS session, or a procedure used to prepare for data transmission of the first MBS session.

Optionally, when the first core network device is not the multicast/broadcast user plane network element, because the first core network device may learn of a specific type of procedure that the first procedure is, the first core network device may learn, by using the procedure type, that the first procedure is a procedure before the multicast/broadcast user plane network element sends the 1^{st} data packet of the first MBS session to the access network device. Detailed description of the first procedure is provided in a subsequent embodiment, and details are not described herein.

Optionally, the initial MBS QFI SN corresponding to the first MBS session may be less than or equal to a first MBS QFI SN, or a value obtained by subtracting the initial MBS QFI SN corresponding to the first MBS session from a first MBS QFI SN is less than or equal to a first value.

Optionally, the first MBS QFI SN is a preset MBS QFI SN of the 1^{st} data packet. If the initial MBS QFI SN corresponding to the first MBS session is at an MBS session granularity, the first MBS QFI SN (or the 1^{st} data packet) is also at a session granularity.

If the initial MBS QFI SN corresponding to the first MBS session is at a QoS flow granularity, the first MBS QFI SN (or the 1^{st} data packet) is also at a QoS flow granularity. For example, when the initial MBS QFI SN corresponding to the first MBS session includes the initial MBS QFI SN of the QoS flow 1, the initial MBS QFI SN of the QoS flow 2, and the initial MBS QFI SN of the QoS flow 3, correspondingly, the first MBS QFI SN includes a preset MBS QFI SN of the 1^{st} data packet of the QoS flow 1, a preset MBS QFI SN of the 1^{st} data packet of the QoS flow 2, and a preset MBS QFI SN of the 1^{st} data packet of the QoS flow 3. The initial MBS QFI SN of each QoS flow and the preset MBS QFI SN of each QoS flow meet the foregoing relationship.

In a possible implementation, the first value is a nonnegative integer less than or equal to a PDCP window size. For example, a dimension of the PDCP window size may be a sequence number or a number. For example, if the PDCP window size is X, it may indicate that the PDCP window includes X sequence numbers or numbers.

For example, the PDCP window size may be 2^{*PDCP-SN-Size-*1}*.* PDCP-SN-Size indicates a size of a PDCP SN. The size of the PDCP SN may be determined by the access network device and indicated to the first core network device, and a value of the PDCP SN may be, for example, 18 bits or 12 bits. If the access network device does not indicate the size of the PDCP SN to the first core network device, the first core network device may consider that the size of the PDCP SN is 12 bits by default. Alternatively, the PDCP window size may be a fixed value. Optionally, the value may be related to PDCP-SN-Size.

It should be noted that, in this application, the size (size) of the PDCP SN may also be understood as a quantity of bits (or a quantity of bytes) occupied by the PDCP SN, or may be understood as a length of the PDCP SN. The three may be replaced with each other. Similarly, a size of the HFN may also be understood as a quantity of bits occupied by the HFN or a length of the HFN.

In another possible implementation, the first value may be a specific nonnegative integer. For example, a protocol may specify the first value.

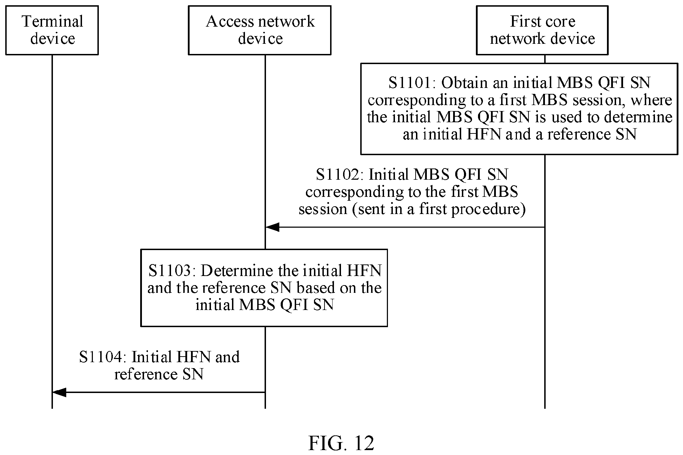

When the first core network device is a mobility management network element and the network device is an access network device, as shown in FIG. 12, the communication method may further include the following steps.

S1103: The access network device determines the initial HFN and the reference SN based on the initial MBS QFI SN corresponding to the first MBS session.

In a possible implementation, the access network device may use values of N most significant bits of the initial MBS QFI SN corresponding to the first MBS session as the initial HFN, and use values of K least significant bits of the initial MBS QFI SN corresponding to the first MBS session as the reference SN. K is a size of the PDCP SN, and N is a size of the HFN.

In another possible implementation, the access network device may determine the initial HFN and the reference SN based on the initial MBS QFI SN corresponding to the first MBS session and an offset value. For example, the offset value may be less than or equal to the PDCP window size. For example, a value obtained by subtracting, from the initial MBS QFI SN corresponding to the first MBS session, an initial COUNT value indicated by the initial HFN and the reference SN is less than or equal to the PDCP window size.

Optionally, when the access network device includes a CU, and the CU includes a CU-CP and a CU-UP, the CU-CP may determine the initial HFN and the reference SN.

Optionally, the initial HFN and the reference SN indicate the initial COUNT value. The initial COUNT value may be understood as the 1^{st} or beginning COUNT value of an MRB after the MRB is created or reconfigured. Alternatively, the initial COUNT value may be used as an initial value of a state variable RX_DELIV The state variable RX_DELIV indicates a COUNT value of the 1^{st} (first) PDCP service data unit (service data unit, SDU) that is not delivered by a terminal device to an upper layer but waits to be delivered.

Optionally, the initial HFN may be used as an HFN of the initial COUNT value, and the reference SN may be used as an SN of the initial COUNT value.

S1104: The access network device sends the initial HFN and the reference SN to the terminal device. Correspondingly, the terminal device receives the initial HFN and the reference SN from the access network device.

Optionally, the access network device may send the initial HFN and the reference SN to the terminal device in a procedure of creating a first MRB or reconfiguring the first MRB. The first MRB is an MRB of the first MBS session.

Optionally, the initial HFN and the reference SN may be carried in a PDCP configuration. Further, the initial HFN and the reference SN may be carried in a *multicastHFN-AndRefSN* information element in the PDCP configuration.

Optionally, after receiving the initial HFN and the reference SN, the terminal device may determine the initial COUNT value. The initial COUNT value may be used as the initial value of the state variable RX_DELIV. Subsequently, when receiving a data packet of the first MBS session, the terminal device may determine, based on the initial value of the state variable RX_DELIV, a COUNT value of the data packet received by the terminal device.

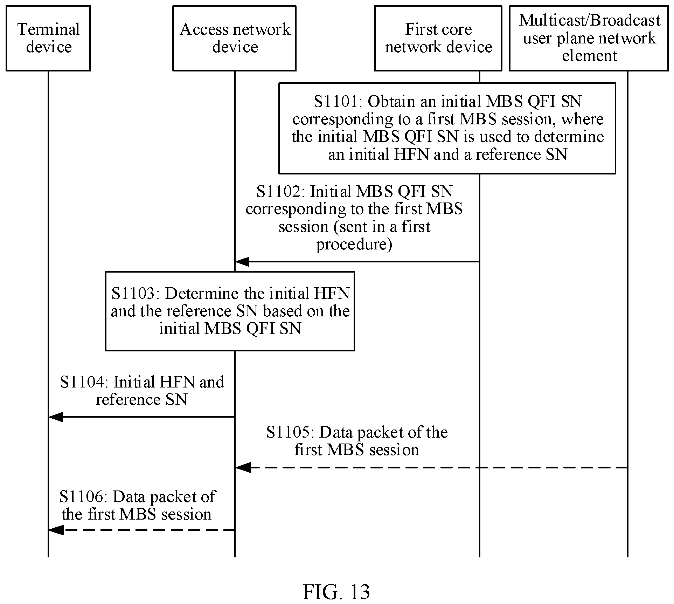

Optionally, as shown in FIG. 13, after step S1104, the communication method may further include the following steps.

S1105: The multicast/broadcast user plane network element sends the data packet of the first MBS session to the access network device. Correspondingly, the access network device receives the data packet of the first MBS session from the multicast/broadcast user plane network element.

The data packet of the first MBS session includes the 1^{st} data packet of the first MBS session.

Optionally, an (actual) MBS QFI SN of the 1^{st} data packet is greater than or equal to the first MBS QFI SN. Alternatively, a value obtained by subtracting the initial MBS QFI SN corresponding to the first MBS session from the MBS QFI SN of the 1^{st} data packet is less than or equal to the first value.

Optionally, the (actual) MBS QFI SN of the 1^{st} data packet, the first MBS QFI SN, and the initial MBS QFI SN corresponding to the first MBS session are located in one PDCP window.

In a possible example, values of the (actual) MBS QFI SN of the 1^{st} data packet, the first MBS QFI SN, and the initial MBS QFI SN corresponding to the first MBS session may be equal.

In another possible example, any two of the (actual) MBS QFI SN of the 1^{st} data packet, the first MBS QFI SN, and the initial MBS QFI SN corresponding to the first MBS session may be equal. For example, the (actual) MBS QFI SN of the 1^{st} data packet and the first MBS QFI SN may be equal.

Based on this solution, when the first value is a nonnegative integer less than the PDCP window size, the actual MBS QFI SN of the 1^{st} data packet and the initial MBS QFI SN corresponding to the first MBS session are located in one PDCP window size. Therefore, the initial HFN determined by the access network device, the initial COUNT value indicated by the reference SN, and the actual MBS QFI SN of the 1^{st} data packet are located in one PDCP window size, and the terminal device can accurately obtain a COUNT value of a subsequent data packet based on the initial COUNT value. In addition, the (actual) MBS QFI SN of the 1^{st} data packet, the preset MBS QFI SN, and the initial MBS QFI SN corresponding to the first MBS session are allowed to be unequal in a specific range, so that flexibility can be improved.

S1106: The access network device sends the data packet of the first MBS session to the terminal device. Correspondingly, the terminal device receives the data packet of the first MBS session from the access network device.

Optionally, the access network device may send the data packet of the first MBS session to the terminal device by using the first MRB. The terminal device receives the data packet by using the first MRB.

Based on the foregoing solution, before sending the 1^{st} data packet of the first MBS session to the access network device, the core network device may send the initial MBS QFI SN corresponding to the first MBS session, so that the access network device can determine the initial HFN and the reference SN based on the initial MBS QFI SN, and configure the initial HFN and the reference SN for a terminal device, and the access network device can configure an MRB for the terminal device in time without waiting for the data packet to arrive, to indicate the initial HFN and the reference SN. In addition, because the initial MBS QFI SN is a parameter provided by a core network side, the core network side may finally use the initial MBS QFI SN as an MBS QFI SN of the 1^{st} data packet, or determine an MBS QFI SN of the 1^{st} data packet based on the initial MBS QFI SN, so that accuracy of the initial HFN and the reference SN that are configured by the access network device before the data packet is received can be improved.

The foregoing describes an overall procedure of the communication method provided in this application. The following describes a manner of obtaining the initial MBS QFI SN corresponding to the first MBS session and the first procedure.

Optionally, the first core network device may obtain, in the following three manners, the initial MBS QFI SN corresponding to the first MBS session:
Manner 1: The first core network device determines the initial MBS QFI SN corresponding to the first MBS session.

Optionally, in Manner 1, the first core device may be a multicast/broadcast session management network element or a multicast/broadcast user plane network element.

Optionally, when the first core network device is a multicast/broadcast user plane network element, and a second core network device is a multicast/broadcast session management network element, the first core network device may determine, based on a trigger (or request) of the second core network device, the initial MBS QFI SN corresponding to the first MBS session.

In a possible implementation, the second core network device may send second information to the first core network device, where the second information is used to request the initial MBS QFI SN corresponding to the first MBS session. After receiving the second information from the second core network device, the first core network device may determine, based on the second information, the initial MBS QFI SN corresponding to the first MBS session. In addition, the first core network device may further return the initial MBS QFI SN corresponding to the first MBS session to the second core network device.

It should be noted that this application further relates to first information. The first information is described in a subsequent embodiment, and details are not described herein.

Optionally, the determining, based on the second information, the initial MBS QFI SN corresponding to the first MBS session may be understood as: determining, based on a trigger or a request of the second information, the initial MBS QFI SN corresponding to the first MBS session.

Optionally, the second information may be information in a packet forwarding control protocol (packet forwarding control protocol, PFCP) session establishment (PFCP Session Establishment) procedure, a PFCP session modification procedure, or an N4 multicast session modification (N4mb Session Modification) procedure. For example, the second core network device may add the second information to a request message in the PFCP session establishment or modification procedure or the N4 multicast session modification procedure. The first core network device may return the initial MBS QFI SN corresponding to the first MBS session to the second core network device in a response message in the PFCP session establishment or modification procedure or the N4 multicast session modification procedure.

Optionally, the second information may be implemented by using a 1-bit indication. Alternatively, the second information may be implemented by using a field that is set to a specific value (for example, set to TRUE). Certainly, the second information may alternatively be implemented in another manner. This is not specifically limited in this application.

In another possible implementation, the second core network device may send a fourth message to the first core network device, where the fourth message is used to request to establish or modify a PFCP session. After receiving the fourth message from the second core network device, the first core network device may determine, based on the fourth message, the initial MBS QFI SN corresponding to the first MBS session. In addition, the first core network device may further return the initial MBS QFI SN corresponding to the first MBS session to the second core network device.

It should be noted that this application further relates to a first message, a second message, and a third message, which are described in a subsequent embodiment, and details are not described herein.

Optionally, the determining, based on the fourth message, the initial MBS QFI SN corresponding to the first MBS session may be understood as: determining, based on a trigger of the fourth message, the initial MBS QFI SN corresponding to the first MBS session.

Optionally, the fourth message may be a request message in a PFCP session setup procedure, a PFCP session modification procedure, or an N4 multicast session modification procedure. The first core network device may return the initial MBS QFI SN corresponding to the first MBS session to the second core network device in a response message in the PFCP session establishment or modification procedure.

In other words, in this possible implementation, when the second core network device requests to establish or modify the PFCP session, the first core network device determines the initial MBS QFI SN of the first MBS session by default.

Optionally, when the first core network device is a multicast/broadcast session management network element, after determining the initial MBS QFI SN corresponding to the first MBS session, the multicast/broadcast session management network element may further send the initial MBS QFI SN or the first MBS QFI SN to the second core network device (a multicast/broadcast user plane network element), so that when subsequently sending the 1^{st} data packet of the first MBS session, the multicast/broadcast user plane network element determines the actual MBS QFI SN of the 1^{st} data packet based on the initial MBS QFI SN or the first MBS QFI SN.

Optionally, the multicast/broadcast session management network element may send a fourth message to the multicast/broadcast user plane network element, where the fourth message includes the initial MBS QFI SN corresponding to the first MBS session or the first MBS QFI SN. The fourth message is used to request to establish or modify a PFCP session or used to modify an N4mb session. After receiving the fourth message, the multicast/broadcast user plane network element may send a fifth message to the multicast/broadcast session management network element, where the fifth message is a response message for the fourth message.

When the fifth message indicates that the PFCP session is successfully established or modified or indicates that the N4mb session is successfully modified, it indicates that the multicast/broadcast user plane network element accepts the initial MBS QFI SN corresponding to the first MBS session or the first MBS QFI SN that is determined by the multicast/broadcast session management network element. Subsequently, the multicast/broadcast session management network element may send the initial MBS QFI SN to the mobility management network element.

Optionally, the fifth message may further include a second MBS QFI SN, and the second MBS QFI SN may be understood as an initial MBS QFI SN recommended by the multicast/broadcast user plane network element. The multicast/broadcast session management network element may accept or may not accept the initial MBS QFI SN recommended by the multicast/broadcast user plane network element.

Manner 2: The first core network device may receive, from a second core network device, the initial MBS QFI SN corresponding to the first MBS session. That is, the first core network device receives, from the second core network device, the initial MBS QFI SN corresponding to the first MBS session.

For example, in Manner 2, the first core network device may be a mobility management network element, and correspondingly, the second core network device may be a session management network element or a multicast/broadcast session management network element. Alternatively, the first core network device may be a multicast/broadcast session management network element, and correspondingly, the second core network device may be a multicast/broadcast user plane network element.

In a possible implementation, the first core network device may send second information to the second core network device. The second information is used to request the initial MBS QFI SN corresponding to the first MBS session.

Optionally, when the first core network device is a multicast/broadcast session management network element, the first core network device may add the second information to a request message in a PFCP session establishment or modification procedure. The second core network device may return the initial MBS QFI SN corresponding to the first MBS session to the first core network device in a response message in the PFCP session establishment or modification procedure.

In another possible implementation, when the first core network device is a multicast/broadcast session management network element, the first core network device may send a fourth message to the second core network device, where the fourth message is used to request to establish or modify a PFCP session or to modify an N4mb session. After receiving the fourth message from the first core network device, the second core network device may return the initial MBS QFI SN corresponding to the first MBS session to the first core network device in a fifth message. The fifth message is response information for the fourth message.

Manner 3: The first core network device may receive, from a second core network device, a parameter used to determine the initial MBS QFI SN corresponding to the first MBS session, and determine the initial MBS QFI SN based on the parameter.

For example, in Manner 3, the first core network device may be a multicast/broadcast session management network element, and correspondingly, the second core network device may be a multicast/broadcast user plane network element.

For example, the multicast/broadcast user plane network element may send the first MBS QFI SN to the multicast/broadcast session management network element. Correspondingly, the multicast/broadcast session management network element receives the first MBS QFI SN from the multicast/broadcast user plane network element, and determines, based on the first MBS QFI SN, the initial MBS QFI SN corresponding to the first MBS session. For a size relationship between the first MBS QFI SN and the initial MBS QFI SN corresponding to the first MBS session, refer to related descriptions in step S1102. Details are not described herein again.

Optionally, the first core network device may send the initial MBS QFI SN corresponding to the first MBS session to the network device in the following four procedures, that is, the first procedure may have the following four cases:
Case 1: The first procedure is a shared transmission channel setup procedure.

The shared transmission channel setup procedure is used to establish a shared transmission channel for the first MBS session, and the shared transmission channel is used for data transmission between a core network and an access network.

Optionally, in Case 1, the 1^{st} data packet of the first MBS session may be the 1^{st} data packet transmitted through the shared transmission channel newly established by using the first procedure.

Optionally, that the first core network device sends the initial MBS QFI SN corresponding to the first MBS session to a network device may include: The first core network device sends a first message to the network device, where the first message includes the initial MBS QFI SN corresponding to the first MBS session. The first message is used to establish the shared transmission channel. Further, the first message is used to carry address information of the shared transmission channel and/or status information of the first MBS session. The address information of the shared transmission channel may be, for example, shared NG-U multicast TNL information (Shared NG-U Multicast TNL Information), where NG-U refers to a next generation (next generation, NG) user plane (user plane), and TNL refers to a transport network layer (transport network layer, TNL).

For example, the address information of the shared transmission channel may indicate an NG-U tunnel (tunnel) address in an internet protocol (internet protocol, IP) multicast manner. The status information of the first MBS session may indicate a status of the first MBS session (MBS Session Status).

In a possible implementation, if the first core network device is a multicast/broadcast user plane network element, and the network device is a multicast/broadcast session management network element, the first message may be a session modification response (Session Modification Response) message, a PFCP session establishment response message, or a PFCP session modification response message.

In another possible implementation, if the first core network device is a multicast/broadcast session management network element, and the network device is a mobility management network element, the first message may be an MBS session context update response (MBSSession_ContextUpdate Response) message.

In still another possible implementation, if the first core network device is a mobility management network element, and the network device is an access network device, the first message may be a distributed setup response (Distribution Setup Response) message.

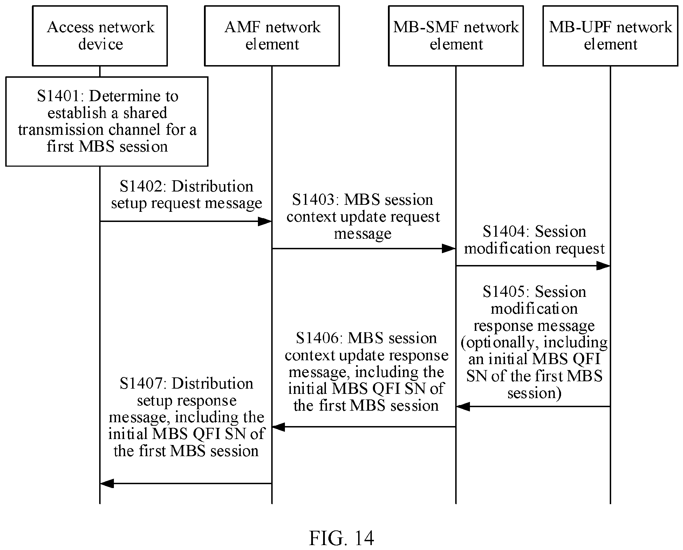

Based on the related descriptions in Case 1, for example, FIG. 14 is a possible application procedure of the communication method provided in this application in Case 1. Refer to FIG. 14. For example, a mobility management network element is an AMF network element, a multicast/broadcast session management network element is an MB-SMF network element, and a multicast/broadcast session management network element is an MB-UPF network element. The procedure may include the following steps.

S1401: An access network device determines to establish a shared transmission channel for a first MBS session.

S1402: The access network device sends a distribution setup request (Distribution Setup Request) message to the AMF network element. Correspondingly, the AMF network element receives the distribution setup request message from the access network device.

Optionally, the distribution setup request message may be used to request to establish the shared transmission channel for the first MBS session.

S1403: The AMF network element sends an MBS session context update request (MBSSession_ContextUpdate Request) message to the MB-SMF network element. Correspondingly, the MB-SMF network element receives the MBS session context update request message from the AMF network element.

Optionally, the MBS session context update request message is used to request to update a context of the first MBS session. In addition, the AMF network element may further store information about the access network device for the first MBS session. The MB-SMF network element may store information about the AMF network element for the first MBS session.

S1404: The MB-SMF network element sends a session modification request (Session Modification Request) message to the MB-UPF network element. Correspondingly, the MB-UPF network element receives the session modification request message from the MB-SMF network element.

Optionally, the session modification request message may be used to request to establish or modify a transmission resource of the first MBS session.

Optionally, the session modification request message in step S1404 may be replaced with a PFCP session establishment request message or a PFCP session modification request message.

S1405: The MB-UPF network element sends a session modification response message to the MB-SMF network element. Correspondingly, the MB-SMF network element receives the session modification response message from the MB-UPF network element.

Optionally, the session modification response message may include an initial MBS QFI SN corresponding to the first MBS session. For a manner of obtaining the initial MBS QFI SN, refer to the foregoing related descriptions. Details are not described herein again.

Optionally, the session modification response message in step S1405 may be replaced with a PFCP session establishment response message or a PFCP session modification response message.

S 1406: The MB-SMF network element sends an MBS session context update response message to the AMF network element. Correspondingly, the AMF network element receives the MBS session context update response message from the MB-SMF network element.

The MBS session context update response message may include the initial MBS QFI SN corresponding to the first MBS session. The initial MBS QFI SN may be carried in the session modification response message in step S1405, or may be determined by the MB-SMF network element. For a manner of obtaining the initial MBS QFI SN, refer to the foregoing related descriptions. Details are not described herein again.

S1407: The AMF network element sends a distribution setup response message to the access network device. Correspondingly, the access network device receives the distribution setup response message from the AMF network element.

The distribution setup response message may include the initial MBS QFI SN corresponding to the first MBS session. The initial MBS QFI SN may be carried in the MBS session context update response message in step S1406.

Case 2: The first procedure is a PDU session setup procedure or a PDU session modification procedure.

The PDU session setup procedure may be used to establish or modify the first MBS session, and the PDU session modification procedure may be used to establish or modify the first MBS session.

Optionally, in Case 2, the 1^{st} data packet of the first MBS session may be the 1^{st} data packet of the first MBS session after setup or modification of the first MBS session is completed.

Optionally, that the first core network device sends the initial MBS QFI SN corresponding to the first MBS session to a network device may include: The first core network device sends a second message to the network device, where the second message includes the initial MBS QFI SN corresponding to the first MBS session. The second message is used to carry an identifier of the first MBS session.

In a possible implementation, if the first core network device is a session management network element or a multicast/broadcast session management network element, and the network device is a mobility management network element, the second message may be a PDU session update session management (session management, SM) context response (PDUSession_UpdateSMContext Response) message.

In another possible implementation, if the first core network device is a mobility management network element, and the network device is an access network device, the second message may be a PDU session resource modification request (PDU Session Resource Setup Request) message.

Optionally, if a terminal device is the 1^{st} terminal device that requests to join the first MBS session in a plurality of terminal devices served by the access network device, a request of the terminal device for joining the first MBS session may trigger the first core network device to send, in the PDU session setup procedure or the PDU session modification procedure, the initial MBS QFI SN corresponding to the first MBS session. If a terminal device is not the 1^{st} terminal device that requests to join the first MBS session in a plurality of terminal devices served by the access network device, a request of the terminal device for joining the first MBS session does not trigger the first core network device to send, in the PDU session setup procedure or the PDU session modification procedure, the initial MBS QFI SN corresponding to the first MBS session. In other words, the first core network device does not send, in the PDU session setup procedure or the PDU session modification procedure of the terminal device, the initial MBS QFI SN corresponding to the first MBS session.

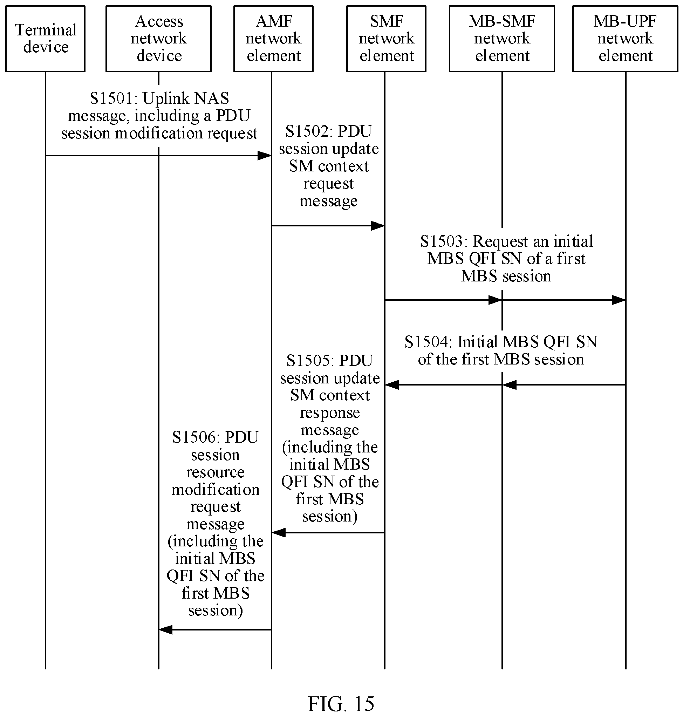

Based on the related descriptions in Case 2, for example, FIG. 15 is a possible application procedure of the communication method provided in this application in Case 2. Refer to FIG. 15. For example, a mobility management network element is an AMF network element, a multicast/broadcast session management network element is an MB-SMF network element, and a multicast/broadcast session management network element is an MB-UPF network element. The procedure may include the following steps.

S1501: A terminal device sends an uplink NAS message to the AMF network element. Correspondingly, the AMF network element receives the uplink NAS message from the terminal device.

Optionally, the NAS message may include a PDU session modification request. The PDU session modification request may include an identifier of a first MBS session, indicating that the terminal device requests to join the first MBS session.

S1502: The AMF network element sends a PDU session update SM context request (PDUSession_UpdateSMContext Request) message to an SMF network element. Correspondingly, the SMF network element receives the PDU session update SM context request message from the AMF network element.

Optionally, the PDU session update SM context request message is used to send the NAS message in step S1501.

S1503: The SMF network element requests an initial MBS QFI SN of the first MBS session from the MB-UPF network element by using the MB-SMF network element.

S1504: The MB-UPF network element returns the initial MBS QFI SN of the first MBS session to the SMF network element by using the MB-SMF network element.

S1505: The SMF network element sends a PDU session update SM context response message to the AMF network element. Correspondingly, the AMF network element receives the PDU session update SM context response message from the SMF network element.

The PDU session update SM context response message includes the initial MBS QFI SN of the first MBS session.

S1506: The AMF network element sends a PDU session resource modification request message to an access network device. Correspondingly, the access network device receives the PDU session resource modification request message from the AMF network element.

The PDU session resource modification request message may include the initial MBS QFI SN of the first MBS session.

Optionally, after receiving the PDU session resource modification request message, the access network device may exchange an RRC message with the terminal device, to modify a PDU session. Then, the access network device may send a PDU session resource modification response message to the AMF network element.

Optionally, the procedure shown in FIG. 15 is described by using an example in which the MB-UPF network element determines the initial MBS QFI SN of the first MBS session. In addition, the initial MBS QFI SN of the first MBS session may alternatively be determined by the MB-SMF network element. In this case, step S1503 and step S1504 may be replaced with steps S1503' and S1504'.

S1503': The SMF network element requests an initial MBS QFI SN of the first MBS session from the MB-SMF network element.

S1504': The MB-SMF network element returns the initial MBS QFI SN of the first MBS session to the SMF network element.

Case 3: The first procedure is an MBS session update procedure.

The MBS session update procedure is used to add a QoS flow to the first MBS session. For ease of description, the QoS flow added to the first MBS session is referred to as a first QoS flow in the following embodiments of this application. It may be understood that the first QoS flow may be one or more added QoS flows.

Optionally, in Case 3, the 1^{st} data packet of the first MBS session may be the 1^{st} data packet of the first QoS flow of the first MBS session.

Optionally, that the first core network device sends the initial MBS QFI SN corresponding to the first MBS session to a network device may include: The first core network device sends a second message to the network device, where the second message includes the initial MBS QFI SN corresponding to the first MBS session. The second message is used to carry an identifier of the first MBS session.

In a possible implementation, if the first core network device is a multicast/broadcast session management network element, and the network device is a mobility management network element, the second message may be an MBS communication N2 message transfer (MBSCommunication_N2Message Transfer) message.

In another possible implementation, if the first core network device is a mobility management network element, and the network device is an access network device, the second message may be an MBS session update request (MBS Session Update Request) message.

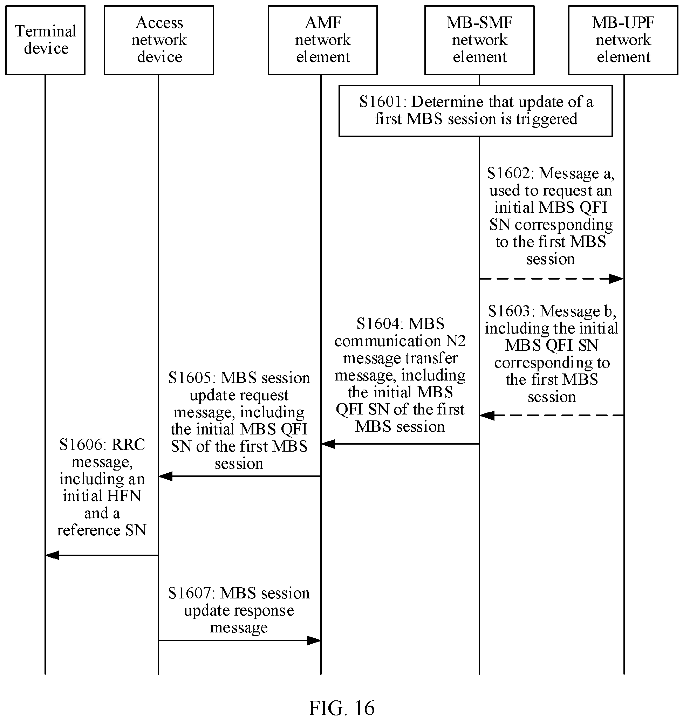

Based on the related descriptions in Case 3, for example, FIG. 16 is a possible application procedure of the communication method provided in this application in Case 3. Refer to FIG. 16. For example, a mobility management network element is an AMF network element, a multicast/broadcast session management network element is an MB-SMF network element, and a multicast/broadcast session management network element is an MB-UPF network element. The procedure may include the following steps.

S1601: The MB-SMF network element determines that update of a first MBS session is triggered.

S1602: The MB-SMF network element sends a message a to the MB-UPF network element. Correspondingly, the MB-UPF network element receives the message a from the MB-SMF network element.

The message a is used to request an initial MBS QFI SN corresponding to the first MBS session.

S1603: The MB-UPF network element sends a message b to the MB-SMF network element. Correspondingly, the MB-SMF network element receives the message b from the MB-UPF network element.

The message b includes the initial MBS QFI SN corresponding to the first MBS session. Alternatively, the message b includes a parameter used to determine the initial MBS QFI SN.

S1604: The MB-SMF network element sends an MBS communication N2 message transfer message to the AMF network element. Correspondingly, the AMF network element receives the MBS communication N2 message transfer message from the MB-SMF network element.

Optionally, the MBS communication N2 message transfer message is used to transmit updated MBS session information.

The MBS communication N2 message transfer message includes the initial MBS QFI SN corresponding to the first MBS session.

S1605: The AMF network element sends an MBS session update request message to an access network device. Correspondingly, the access network device receives the MBS session update request message from the AMF network element.

Optionally, the MBS session update request message is used to add a first QoS flow to the first MBS session.

The MBS session update request message includes the initial MBS QFI SN of the first MBS session.

S1606: The access network device sends an RRC message to a terminal device. Correspondingly, the terminal device receives the RRC message from the access network device.

The RRC message may be used to reconfigure or add an MRB corresponding to the first QoS flow. The RRC message may include an initial HFN and a reference SN that are determined by the access network device.

S1607: The access network device sends an MBS session update response (MBS Session Update Response) message to the AMF network element. Correspondingly, the AMF network element receives the MBS session update response message from the access network device.

Optionally, the procedure shown in FIG. 16 is described by using an example in which the MB-UPF network element determines the initial MBS QFI SN of the first MBS session. In addition, the initial MBS QFI SN of the first MBS session may alternatively be determined by the MB-SMF network element. In this case, step S1602 and step S1603 may not be performed, and the initial MBS QFI SN corresponding to the first MBS session in step S1604 is determined by the MB-SMF network element.

Case 4: The first procedure is a multicast session activation procedure.

The multicast session activation procedure is used to activate the first MBS session.

Optionally, in Case 4, the 1^{st} data packet of the first MBS session may be the 1^{st} data packet after the first MBS session is activated.

Optionally, that the first core network device sends the initial MBS QFI SN corresponding to the first MBS session to a network device may include: The first core network device sends a second message to the network device, where the second message includes the initial MBS QFI SN corresponding to the first MBS session. The second message is used to carry an identifier of the first MBS session.

In a possible implementation, if the first core network device is a multicast/broadcast session management network element, and the network device is a mobility management network element, the second message may be an MBS communication N2 message transfer request (MBSCommunication_N2Message Transfer Request) message.

In another possible implementation, if the first core network device is a mobility management network element, and the network device is an access network device, the second message may be a multicast session activation request (Multicast Session Activation Request) message or a PDU session setup request message. The PDU session setup request message is used to re-establish a connection for a terminal device in an RRC inactive state, so that the terminal device can receive data of the first MBS session after the first MBS session is activated.

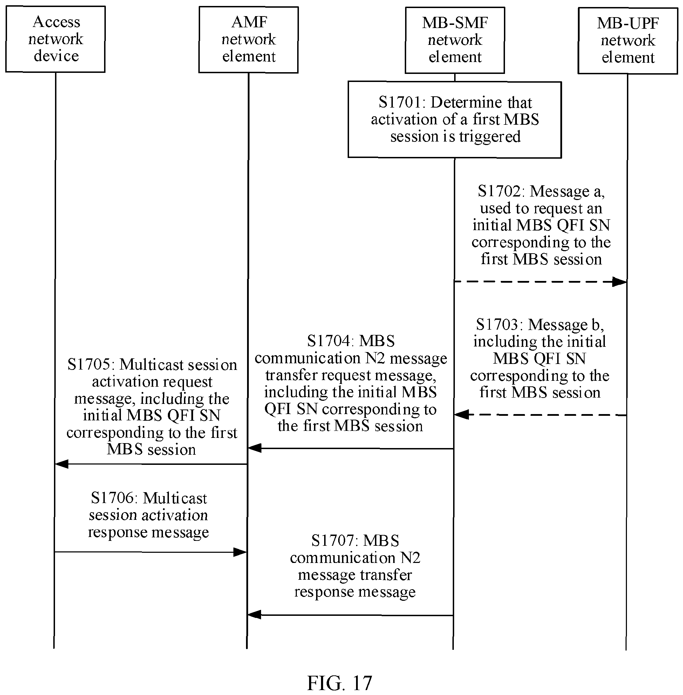

Based on the related descriptions in Case 4, for example, FIG. 17 is a possible application procedure of the communication method provided in this application in Case 4. Refer to FIG. 17. For example, a mobility management network element is an AMF network element, a multicast/broadcast session management network element is an MB-SMF network element, and a multicast/broadcast session management network element is an MB-UPF network element. The procedure may include the following steps.

S1701: The MB-SMF network element determines that activation of a first MBS session is triggered.

S1702: The MB-SMF network element sends a message a to the MB-UPF network element. Correspondingly, the MB-UPF network element receives the message a from the MB-SMF network element.

The message a is used to request an initial MBS QFI SN corresponding to the first MBS session.

S1703: The MB-UPF network element sends a message b to the MB-SMF network element. Correspondingly, the MB-SMF network element receives the message b from the MB-UPF network element.

The message b includes the initial MBS QFI SN corresponding to the first MBS session. Alternatively, the message b includes a parameter used to determine the initial MBS QFI SN.

S1704: The MB-SMF network element sends an MBS communication N2 message transfer request message to the AMF network element. Correspondingly, the AMF network element receives the MBS communication N2 message transfer request message from the MB-SMF network element.

Optionally, the MBS communication N2 message transfer request message is used to request to activate the first MBS session.

The MBS communication N2 message transfer request message includes the initial MBS QFI SN corresponding to the first MBS session.

S1705: The AMF network element sends a multicast session activation request message to an access network device. Correspondingly, the access network device receives the multicast session activation request message from the AMF network element.

Optionally, the multicast session activation request message is used to request to activate the first MBS session.

The multicast session activation request message includes an initial MBS QFI SN of the first MBS session.

S1706: The access network device sends a multicast session activation response (Multicast Session Activation Response) message to the AMF network element.

S1707: The AMF network element sends an MBS communication N2 message transfer response (MBSCommunication_N2Message Transfer Response) message to the MB-SMF network element. Correspondingly, the MB-SMF network element receives the MBS communication N2 message transfer response message from the AMF network element.

Optionally, the procedure shown in FIG. 17 is described by using an example in which the MB-UPF network element determines the initial MBS QFI SN of the first MBS session. In addition, the initial MBS QFI SN of the first MBS session may alternatively be determined by the MB-SMF network element. In this case, step S1702 and step S 1703 may not be performed, and the initial MBS QFI SN corresponding to the first MBS session in step S1704 is determined by the MB-SMF network element.

Case 5: The first procedure is a multicast session deactivation procedure.

The multicast session deactivation procedure is used to deactivate the first MBS session.

Optionally, in Case 5, the 1^{st} data packet of the first MBS session may be the 1^{st} data packet after the first MBS session is deactivated and then activated.

Optionally, in Case 5, the initial MBS QFI SN corresponding to the first MBS session may be a maximum MBS QFI SN of the first MBS session that has been currently used when the first MBS session is deactivated. In this scenario, an MBS QFI SN of the 1^{st} data packet after the first MBS session is deactivated and then activated may be greater than the maximum MBS QFI SN that has been currently used.

Alternatively, the initial MBS QFI SN may be a maximum MBS QFI SN of the first MBS session that has been currently used plus M when the first MBS session is deactivated, where M is a positive integer. In this scenario, an MBS QFI SN of the 1^{st} data packet after the first MBS session is deactivated and then activated may be greater than the maximum MBS QFI SN plus M.

For example, the initial MBS QFI SN is the maximum MBS QFI SN that has been currently used. Assuming that the first MBS session is deactivated, and the maximum MBS QFI SN of the first MBS session that has been currently used is 10,000, 10,000 may be used as an initial MBS QFI SN corresponding to the first MBS session that is reactivated.

Optionally, that the first core network device sends the initial MBS QFI SN corresponding to the first MBS session to a network device may include: The first core network device sends a sixth message to the network device, where the sixth message includes the initial MBS QFI SN corresponding to the first MBS session.

In a possible implementation, the first core network device may be a multicast/broadcast user plane network element, and the network device may be a multicast/broadcast session management network element. In this scenario, the sixth message may be a PFCP session modification response (PFCP Session Modification Response) message.

Optionally, after receiving the initial MBS QFI SN, the multicast/broadcast session management network element may store the initial MBS QFI SN. When the access network device subsequently triggers setup of a shared transmission channel, the multicast/broadcast session management network element may send the initial MBS QFI SN stored in the multicast/broadcast session management network element to the access network device, so that there is no need to send a PFCP session modification request (PFCP Session Modification Request) message to the multicast/broadcast user plane network element to request the initial MBS QFI SN. This reduces interaction between the multicast/broadcast session management network element and the multicast/broadcast user plane network element, and reduces communication overheads. In addition, the multicast/broadcast session management network element sends the initial MBS QFI SN stored in the multicast/broadcast session management network element to the access network device when the access network device triggers setup of the shared transmission channel, so that the access network device can configure the MRB for the terminal device in time.

Optionally, the access network device that triggers setup of the shared transmission channel may be an access network device that has not joined the first MBS session before the first MBS session is deactivated, or an access network device that has joined the first MBS session before the first MBS session is deactivated.

Optionally, if the access network device has joined the first MBS session before the first MBS session is deactivated, the shared transmission channel between the access network device and the core network may be deleted when the first MBS session is deactivated. Therefore, when the access network device joins the first MBS session again, setup of the shared transmission channel needs to be triggered again.

In another possible implementation, the first core network device may be a multicast/broadcast session management network element, and the network device may be an access network device, or optionally may be a CU-CP of the access network device. In this scenario, the sixth message may be a multicast session deactivation request (Multicast Session Deactivation Request) message.

Optionally, after receiving the initial MBS QFI SN, the CU-CP of the access network device may store the initial MBS QFI SN.

When the terminal device subsequently requests to join the first MBS session, according to a solution in the conventional technology, the CU-CP of the access network device needs to request a maximum MBS QFI SN or a COUNT value that has been used or is to be used from a CU-UP of the access network device, and then configure the MRB.

Based on the solution in this embodiment of this application, because the CU-CP of the access network device stores the initial MBS QFI SN from the multicast/broadcast session management network element, the CU-CP of the access network device can configure the MRB for the terminal device without requesting the maximum MBS QFI SN or the COUNT value that has been used or is to be used from the CU-UP of the access network device, thereby reducing interaction between the CU-CP and the CU-UP, and reducing communication overheads.

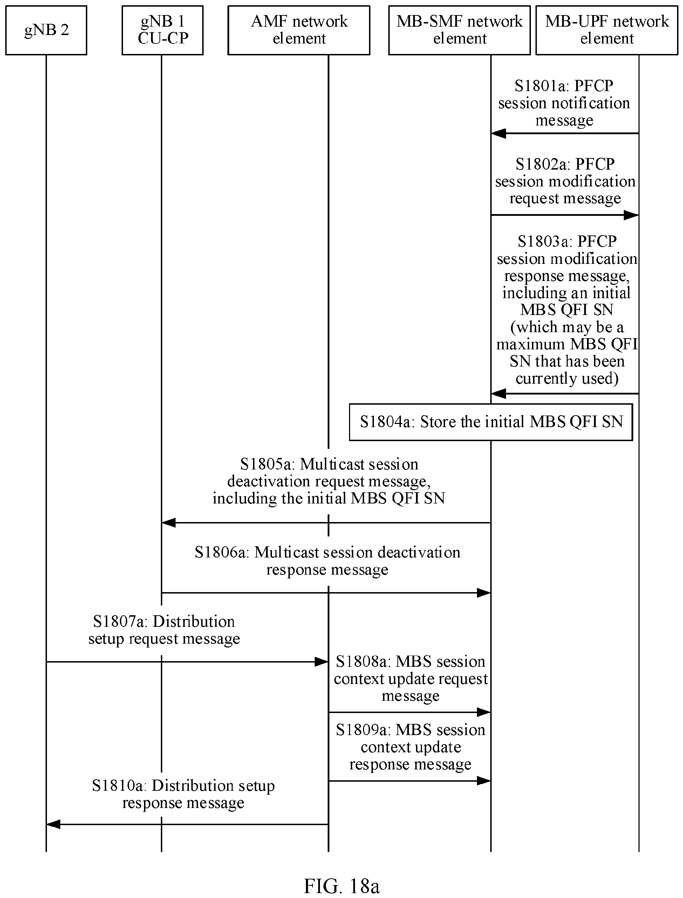

Based on the related descriptions in Case 5, for example, FIG. 18a is a possible application procedure of the communication method provided in this application in Case 5. Refer to FIG. 18a. For example, a mobility management network element is an AMF network element, a multicast/broadcast session management network element is an MB-SMF network element, a multicast/broadcast session management network element is an MB-UPF network element, and a gNB 1 is an access network device that has joined a first MBS session before the first MBS session is deactivated. Optionally, the gNB 1 may include a CU-CP. The following functions implemented by the gNB 1 may also be implemented by the CU-CP of the gNB 1. For example, a gNB2 is an access network device that does not join the first MBS session before the first MBS session is deactivated. The procedure may include the following steps.

S1801a: The MB-UPF network element sends a PFCP session notification (PFCP Session Notification) message to the MB-SMF network element. Correspondingly, the MB-SMF network element receives the PFCP session notification message from the MB-UPF network element.

Optionally, the PFCP session notification message is used to notify the MB-SMF network element to deactivate the first MBS session. For example, the MB-UPF network element may send the PFCP session notification message when the MB-UPF network element does not receive data of the first MBS session.

S1802a: The MB-SMF network element sends a PFCP session modification request (PFCP Session Modification Request) message to the MB-UPF network element. Correspondingly, the MB-UPF network element receives the PFCP session modification request message from the MB-SMF network element.

Optionally, the PFCP session modification request is used to request the MB-UPF network element to buffer data, that is, request the MB-UPF network element to buffer data of the first MBS session when the data arrives, instead of immediately sending the data.

S1803a: The MB-UPF network element sends a PFCP session modification response (PFCP Session Modification Response) message to the MB-SMF network element. Correspondingly, the MB-SMF network element receives the PFCP session modification response message from the MB-UPF network element.

The PFCP session modification response message may include an initial MBS QFI SN corresponding to the first MBS session. The initial MBS QFI SN may be a maximum MBS QFI SN that has been currently used, or may be a maximum MBS QFI SN that has been currently used plus M.

S1804a: The MB-SMF network element stores the initial MBS QFI SN corresponding to the first MBS session.

S1805a: The MB-SMF network element sends a multicast session deactivation request message to the gNB 1. Correspondingly, the gNB 1 receives the multicast session deactivation request message from the MB-SMF network element.

The multicast session deactivation request message may include the initial MBS QFI SN corresponding to the first MBS session.

S1806a: The gNB 1 sends a multicast session deactivation response message to the MB-SMF network element. Correspondingly, the MB-SMF network element receives the multicast session deactivation response message from the gNB 1.

Optionally, when the terminal device served by the gNB 1 subsequently requests to join the first MBS session, the CU-CP of the gNB1 can configure the MRB for the terminal device based on the initial MBS QFI SN obtained in step S1805a, without requesting the maximum MBS QFI SN that has been currently used from the CU-UP of the gNB 1.

S1807a: The gNB 2 sends a distribution setup request (Distribution Setup Request) message to the AMF network element. Correspondingly, the AMF network element receives the distribution setup request message from the gNB 2.

S1808a: The AMF network element sends an MBS session context update request (MBSSession_ContextUpdate Request) message to the MB-SMF network element. Correspondingly, the MB-SMF network element receives the MBS session context update request message from the AMF network element.

For implementation of step S1807a and step S1808a, refer to the related descriptions of step S1402 and step S1403. Details are not described herein again.

S1809a: The MB-SMF network element sends an MBS session context update response message to the AMF network element. Correspondingly, the AMF network element receives the MBS session context update response message from the MB-SMF network element.

The MBS session context update response message may include the initial MBS QFI SN corresponding to the first MBS session. The initial MBS QFI SN is stored in the MB-SMF network element in step S 1804a. In other words, the MB-SMF network element does not need to request the initial MBS QFI SN from the MB-UPF network element, thereby reducing interaction between the MB-SMF network element and the MB-UPF network element.

S1810a: The AMF network element sends a distribution setup response message to the access network device. Correspondingly, the access network device receives the distribution setup response message from the AMF network element.

The distribution setup response message may include the initial MBS QFI SN corresponding to the first MBS session. The initial MBS QFI SN may be carried in the MBS session context update response message in step S1809a.

Optionally, the gNB 1 and the gNB 2 may be a same access network device, or may be different access network devices. This is not specifically limited in this application.

It may be understood that this application is not limited to sending the initial MBS QFI SN of the first MBS session only in one procedure. In actual application, the first core network device may send the initial MBS QFI SN of the first MBS session in a plurality of procedures described in the foregoing five cases.

In the foregoing solution, before receiving a data packet, the access network device configures an initial HFN and a reference SN for the terminal device based on the initial MBS QFI SN corresponding to the first MBS session from the core network. In addition, this application further provides the following three solutions, to configure the initial HFN and the reference SN for the terminal device.

For example, Solution 1 may include the following steps.
(1) The access network device configures a first MRB of the first MBS session for the terminal device before receiving the 1^{st} data packet of the first MBS session.

The access network device may indicate an initial HFN and a reference SN of the first MRB to the terminal device, and the initial HFN and the reference SN indicate an initial COUNT value of the first MRB. The initial HFN and the reference SN may be determined by the access network device. For example, the access network device may guess an HFN and an SN as the initial HFN and the reference SN. For example, the initial HFN and the reference SN may be 0.

For the 1^{st} data packet of the first MBS session, refer to the related descriptions in the foregoing embodiment. Details are not described herein again.

(2) The access network device releases the first MRB of the first MBS session, and establishes a second MRB of the first MBS session.

Optionally, after receiving the 1^{st} data packet of the first MBS session, the access network device may determine whether an MBS QFI SN carried in the 1^{st} data packet is the same as the initial COUNT value, or whether a difference between the two is less than a threshold (for example, a PDCP window size). If the two are different or the difference between the two is greater than or equal to the threshold, the access network device may send signaling to release the first MRB and newly establishes the second MRB. An initial COUNT value of the second MRB may be determined based on the MBS QFI SN carried in the 1^{st} data packet.

Optionally, signaling used to release the first MRB and signaling used to newly establish the second MRB may be carried in a same message, or may be carried in different messages. This is not specifically limited in this application.

For example, Solution 2 may include the following steps.
(1) The access network device configures a first MRB of the first MBS session for the terminal device before receiving the 1^{st} data packet of the first MBS session. For details, refer to step (1) in Solution 1, and details are not described herein again.
   For the 1^{st} data packet of the first MBS session, refer to the related descriptions in the foregoing embodiment. Details are not described herein again.
(2) The access network device reconfigures the initial COUNT value of the first MRB.

Optionally, after receiving the 1^{st} data packet of the first MBS session, the access network device may determine whether an MBS QFI SN carried in the 1^{st} data packet is the same as the initial COUNT value, or whether a difference between the two is less than a threshold (for example, a PDCP window size). If the two are different or the difference between the two is greater than or equal to the threshold, the access network device may send an RRC reconfiguration message to reconfigure the initial COUNT value of the first MRB, where the reconfigured initial COUNT value may be determined based on the MBS QFI SN carried in the 1^{st} data packet.

Optionally, after receiving the RRC reconfiguration message of the access network device, the terminal device may return an RRC reconfiguration complete message to the access network device. When the access network device includes the CU-UP and the CU-CP, after receiving the data of the first MBS session, the CU-UP may temporarily not send the data packet to the terminal device. Subsequently, after receiving the RRC reconfiguration complete message from the terminal device, the CU-CP may notify the CU-UP to start to send the data of the first MBS session.

Based on Solution 1 and Solution 2, the access network device can configure the MRB for the terminal device in time without waiting for the data packet to arrive, to indicate the initial HFN and the reference SN.

For example, Solution 3 may include the following steps.

After receiving the PDU session setup request message, the PDU session modification request message, or the distribution setup response message from the core network, the access network device may temporarily not configure the MRB for the terminal device until the access network device receives the 1^{st} data packet (carrying the MBS QFI SN) from the core network. To be specific, after receiving the 1^{st} data packet, the access network device configures the MRB for the terminal device, and indicates the initial COUNT value to the terminal device based on the MBS QFI SN of the 1^{st} data packet. For the PDU session setup request message or the PDU session modification request message, refer to the related descriptions in step S802. For the distribution setup response message, refer to the related descriptions in step S1402. Details are not described herein again.

Optionally, after receiving the PDU session setup request message, the PDU session modification request message, or the distribution setup response message from the core network, and before receiving the 1^{st} data packet, the access network device may send communication information to the terminal device, to notify the terminal device that no MRB is configured temporarily.

Based on Solution 3, the access network device may indicate the initial COUNT value to the terminal device based on the MBS QFI SN of the 1^{st} data packet, so that accuracy of the configured initial COUNT value can be improved.

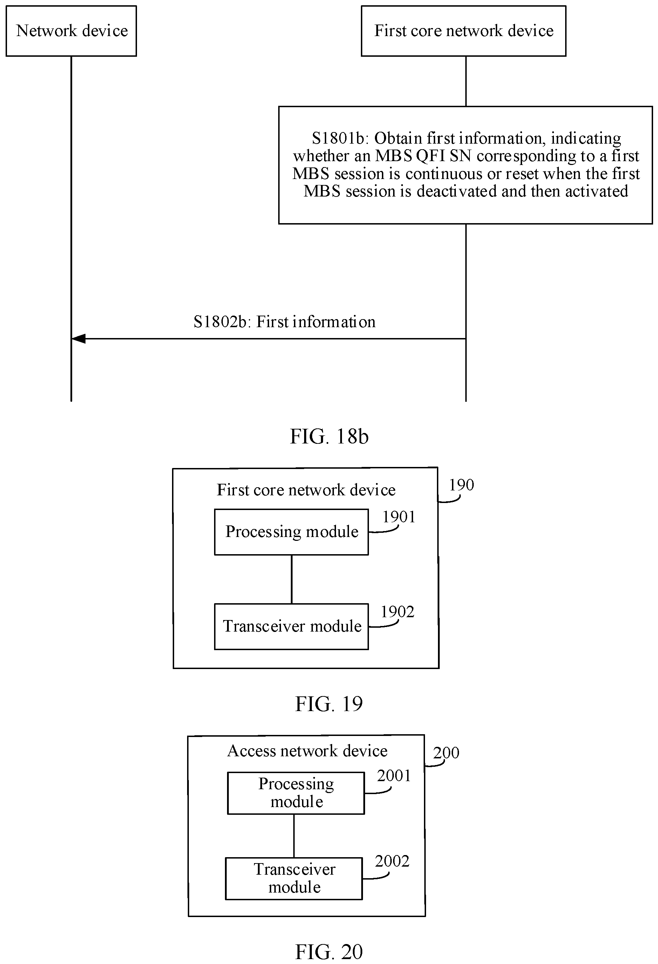

In addition to the method shown above, this application further provides a communication method. As shown in FIG. 18b, the communication method may include the following steps.

S1801b: A first core network device obtains first information.

The first information indicates whether an MBS QFI SN corresponding to a first MBS session is continuous or reset when the first MBS session is deactivated and then activated.

Optionally, the first core network device may be a multicast/broadcast session management network element or a mobility management network element.

Optionally, when the first core network device is a mobility management network element, that a first core network device obtains first information may include: The mobility management network element receives the first information from the multicast/broadcast session management network element.

S1802b: The first core network device sends the first information to a network device. Correspondingly, the network device receives the first information from the first core network device.

Optionally, when the first core network device is a multicast/broadcast session management network element, the network device is a mobility management network element. After receiving the first information, the mobility management network element may send the first information to the access network device. When the first core network device is a mobility management network element, the network device may be an access network device.

Optionally, the first core network device may send a third message to the network device, where the third message carries the first information. Examples are as follows:

The third message may be used to request to establish or modify the first MBS session. For example, the third message may be a PDU session update SM context response message or a PDU session resource modification request message.

Alternatively, the third message may be used to deactivate the first MBS session. For example, the third message may be a multicast session deactivation request message.

Alternatively, the third message may be used to activate the first MBS session. For example, the third message may be a multicast session activation request message.

Alternatively, the third message may be used to update the first MBS session. For example, the third message may be an MBS session update request message.

Alternatively, the third message may be used to establish a shared transmission channel for the first MBS session, and the third message may be a distributed setup response message or the like.

Optionally, the first core network device may further send an initial MBS QFI SN corresponding to the first MBS session to the network device. For details, refer to the related descriptions in FIG. 11 to FIG. 18a. Details are not described herein again.

Optionally, it is assumed that the first information indicates that the MBS QFI SN corresponding to the first MBS session is discontinuous or reset when the first MBS session is deactivated and then activated. In this case, an access network device can release an MRB of the first MBS session when receiving a deactivation request of the first MBS session, so that the access network device can release the MRB as early as possible. Alternatively, when receiving an activation request of the first MBS session, the access network device may release an MRB of the first MBS session and then newly establish a new MRB. Alternatively, when receiving an activation request of the first MBS session, the access network device may reconfigure an MRB of the first MBS session.

Optionally, when newly establishing or reconfiguring the MRB of the first MBS session after receiving the activation request of the first MBS session, the access network device may determine an initial HFN and a reference SN based on the initial MBS QFI SN corresponding to the first MBS session, and indicate the initial HFN and the reference SN to a terminal device.

Based on this solution, when the MBS session is activated, the access network device can configure the MRB for the terminal device without waiting for the 1^{st} data packet of a service, and accuracy of configuring the initial HFN and the reference SN can be improved. In addition, compared with a solution in which an MRB is configured after a data packet is received, a delay can be reduced.

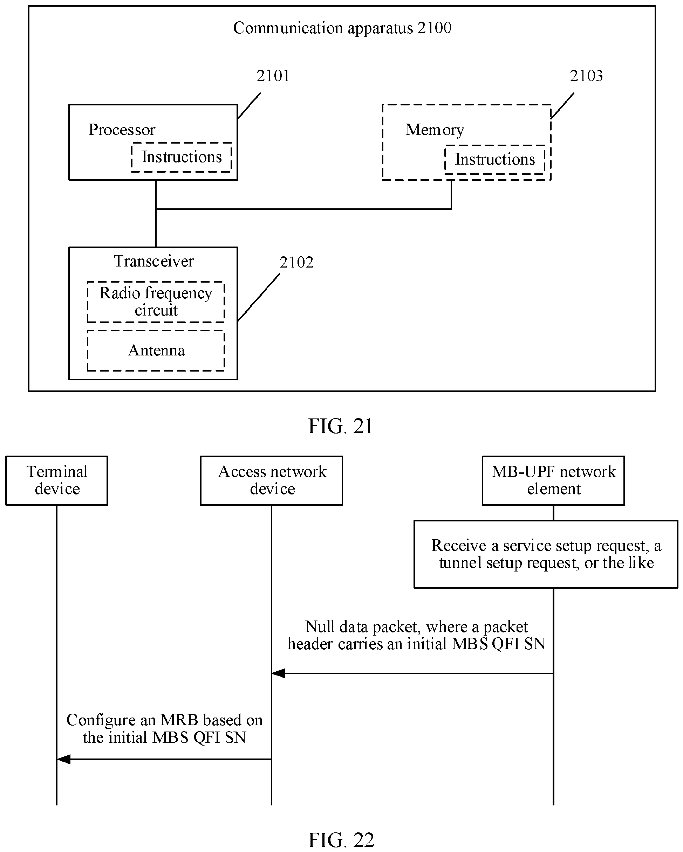

In the foregoing solution provided in this embodiment of this application, it may be considered that the first core network device sends the initial MBS QFI SN to the network device by using a control plane. In addition, the core network device may also send the initial MBS QFI SN to a data plane, that is, an MB-UPF network element may send the initial MBS QFI SN to the access network device by using the data plane. For example, as shown in FIG. 22, after receiving a service setup request, a tunnel setup request, or a PFCP session setup request from the access network device, the MB-UPF network element may send a null data packet to the access network device, and add an initial MBS QFI SN to a packet header of the null data packet. The null data packet is a data packet that includes only a packet header but does not include data (or a bearer or a payload). After receiving the null data packet, the access network device may configure an MRB based on the initial MBS QFI SN carried in the packet header.

However, the core network does not sense whether a data plane transmission channel is successfully established. For example, when an IP multicast manner is used on the data plane, an MB-SMF network element needs to send an NG-U address to the access network device, so that the access network device joins an IP multicast group. After the access device successfully receives the NG-U address and joins the IP multicast group, the data plane transmission channel is successfully established. However, the MB-SMF network element and the MB-UPF network element cannot sense whether the access network device receives the NG-U address and when the access network device successfully receives the NG-U address and successfully joins the IP multicast group.

When a PTP NG-U tunnel (tunnel) manner is used on the data plane, the access network device sends an NG-U address to an MB-SMF network element, to request to establish an NG-U tunnel. The MB-SMF network element may reply to the NG-U tunnel setup request to the access network device, to establish the NG-U tunnel. However, the MB-SMF network element and the MB-UPF network element cannot sense when the access network device receives the reply from the MB-SMF, that is, cannot sense whether the NG-U tunnel is successfully established.

When the core network device cannot sense whether the data plane transmission channel is successfully established, a sending occasion of the null data packet is particularly important. If the null data packet is sent earlier, the access network device may fail to receive the null data packet because the data plane transmission channel is not successfully established. If the null data packet is sent late, an MRB configuration delay is long.

Based on this, this application provides the following three manners of sending the null data packet, to improve a success rate of receiving the null data packet by the access network device, and reduce an MRB configuration delay.

Manner 1: The MB-UPF network element sends a null data packet to the access network device based on a timer (timer).

Optionally, when the MB-UPF network element determines that the initial MBS QFI SN needs to be sent to the access network device, the MB-UPF may start the timer. After the timer expires, the MB-UPF sends the null data packet to the access network device, and adds the initial MBS QFI SN to a packet header of the null data packet.

Optionally, that the MB-UPF network element determines that the initial MBS QFI SN needs to be sent to the access network device may include but is not limited to that the MB-UPF network element receives the service setup request, the tunnel setup request, or the PFCP session setup request from the access network device.

Optionally, duration of the timer may be preset by the MB-UPF network element, or may be reported by the access network device, or may be indicated by the MB-SMF network element to the MB-UPF network element, or may be configured by an administrator by using an operations, administration, and maintenance (operations, administration and maintenance, OAM) platform, or may be defined in a protocol. This is not specifically limited in this application.

Based on Manner 1, proper duration of the timer may be selected, to ensure that the MB-UPF network element sends the null data packet to the access network device at a proper occasion, so as to improve a success rate of receiving the null data packet by the access network device.

Manner 2: The MB-UPF network element continuously sends N null data packets. N is a positive integer greater than 1.

Optionally, when the MB-UPF network element determines that the initial MBS QFI SN needs to be sent to the access network device, the MB-UPF network element may continuously send the N null data packets, and add the initial MBS QFI SN to a packet header of the null data packet.

Optionally, sequence numbers of the N null data packets may be the same, or may be N continuous sequence numbers. This is not specifically limited in this application.

Optionally, the quantity N of continuously sent null data packets may be preset by the MB-UPF network element, or may be reported by the access network device, or may be indicated by the MB-SMF network element to the MB-UPF network element, or may be configured by an administrator by using an OAM platform, or may be defined in a protocol. This is not specifically limited in this application.

Manner 3: The MB-UPF network element periodically sends a null data packet.

Optionally, when the MB-UPF network element determines that the initial MBS QFI

SN needs to be sent to the access network device, the MB-UPF network element may start to periodically send a null data packet to the access network device, and add the initial MBS QFI SN to a packet header of the null data packet.

Optionally, a sending periodicity of the null data packet may be preset by the MB-UPF network element, or may be indicated by the MB-SMF network element to the MB-UPF network element, or may be configured by an administrator by using an OAM platform, or may be defined in a protocol. This is not specifically limited in this application.

Based on Manner 2 or Manner 3, the MB-UPF network element may repeatedly send the null data packet to the access network device, so that the access network device can receive the null data packet as soon as possible after the data plane transmission channel is successfully established, to obtain the initial MBS QFI SN, thereby improving a success rate of receiving the null data packet by the access network device, and reducing an MRB configuration delay.

Optionally, if the MB-UPF network element supports sending the initial MBS QFI SN by using the control plane (for example, the one or more procedures shown in FIG. 8 to FIG. 18a) and the data plane (for example, the procedure shown in FIG. 22), whether the initial MBS QFI SN is finally sent by using the control plane or the data plane may be determined by the MB-UPF network element. Alternatively, whether the initial MBS QFI SN is sent by using the control plane (for example, the one or more procedures shown in FIG. 8 to FIG. 18a) or the data plane (for example, the procedure shown in FIG. 22) may be determined by the MB-SMF network element.

In a scenario in which the MB-SMF network element determines a sending manner (the control plane or the data plane) of the initial MBS QFI SN, in a possible implementation, the MB-SMF network element may send indication information to the MB-UPF network element to explicitly indicate the sending manner of the initial MBS QFI SN.

For example, the indication information may be a 1-bit indication. When the 1-bit is set to "1" (or "0"), it indicates that the initial MBS QFI SN is sent by using the control plane. When the 1-bit is set to "0" (or "1"), it indicates that the initial MBS QFI SN is sent by using the data plane. Alternatively, the indication information may be a Boolean-type parameter. When the Boolean-type parameter is set to "TRUE", it indicates that the initial MBS QFI SN is sent by using the control plane. When the Boolean-type parameter is set to "FALSE", it indicates that the initial MBS QFI SN is sent by using the data plane.

In another possible implementation, if the message sent by the MB-SMF network element to the MB-UPF network element does not carry indication information about a sending manner of the initial MBS QFI SN, the MB-UPF network element may send the initial MBS QFI SN by using the control plane (or the data plane) by default.

After determining the sending manner of the initial MBS QFI SN, the MB-UPF network element may send the initial MBS QFI SN in the sending manner, so that the access network device performs MRB configuration.

It may be understood that, in the foregoing embodiments, the methods and/or the steps implemented by the access network device may be implemented by a component (for example, a processor, a chip, a chip system, a circuit, a logical module, or software such as a chip or a circuit) that can be used in the access network device; or the methods and/or the steps implemented by the core network device may be implemented by a component (for example, a processor, a chip, a chip system, a circuit, a logical module, or software such as a chip or a circuit) that can be used in the core network device.

The foregoing mainly describes the solution provided in this application. Correspondingly, this application further provides a communication apparatus. The communication apparatus is configured to implement the foregoing methods. The communication apparatus may be the access network device in the foregoing method embodiments, or an apparatus including the foregoing access network device, or a component that can be used in the access network device, for example, a chip or a chip system. Alternatively, the communication apparatus may be the core network device in the foregoing method embodiments, or an apparatus including the foregoing core network device, or a component that can be used in the core network device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

Optionally, an example in which the communication apparatus is the first core network device in the foregoing method embodiment is used. FIG. 19 is a diagram of a structure of a first core network device 190. The first core network device 190 includes a processing module 1901 and a transceiver module 1902.

In some embodiments, the first core network device 190 may further include a storage module (not shown in FIG. 19), configured to store program instructions and data.

In some embodiments, the transceiver module 1902 may also be referred to as a transceiver unit, configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module that are respectively configured to perform receiving steps and sending steps performed by the first core network device in the method embodiment and/or configured to support another process of the technology described in this specification. The processing module 1901 may be configured to perform processing (for example, determining, generation, and obtaining) steps performed by the first core network device in the method embodiment and/or configured to support another process of the technology described in this specification.

In a possible implementation,
the processing module 1901 is configured to obtain an initial MBS QFI SN corresponding to a first MBS session, where the initial MBS QFI SN corresponding to the first MBS session is used to determine an initial hyper frame number HFN and a reference SN; and the transceiver module 1902 is configured to send the initial MBS QFI SN corresponding to the first MBS session to a network device in a first procedure, where the first procedure is a procedure before the 1^{st} data packet of the first MBS session is sent to an access network device.

Optionally, the initial MBS QFI SN corresponding to the first MBS session includes: an initial MBS QFI SN of the first MBS session and/or an initial MBS QFI SN of at least one QoS flow of the first MBS session.

Optionally, the initial MBS QFI SN corresponding to the first MBS session is less than or equal to a first MBS QFI SN, or a value obtained by subtracting the initial MBS QFI SN corresponding to the first MBS session from a first MBS QFI SN is less than or equal to a first value. The first MBS QFI SN is a preset MBS QFI SN of the 1^{st} data packet, and the first value is a nonnegative integer less than or equal to a packet data convergence protocol PDCP window size.

Optionally, the transceiver module 1902 is further configured to send the 1^{st} data packet of the first MBS session to the access network device, where the initial MBS QFI SN corresponding to the first MBS session is less than or equal to an MBS QFI SN of the 1^{st} data packet, or a value obtained by subtracting the initial MBS QFI SN corresponding to the first MBS session from an MBS QFI SN of the 1^{st} data packet is less than or equal to the first value.

Optionally, the first procedure is a shared transmission channel setup procedure, the shared transmission channel setup procedure is used to establish a shared transmission channel for the first MBS session, and the shared transmission channel is used for data transmission between a core network and an access network.

Optionally, that the transceiver module 1902 is configured to send the initial MBS QFI SN corresponding to the first MBS session to a network device includes: The transceiver module 1902 is configured to send a first message to the network device, where the first message includes the initial MBS QFI SN corresponding to the first MBS session, and the first message is used to carry address information of the shared transmission channel and/or status information of the first MBS session.

Optionally, the first procedure is a PDU session setup procedure or a PDU session modification procedure, the PDU session setup procedure is used to establish or modify the first MBS session, and the PDU session modification procedure is used to establish or modify the first MBS session.

Optionally, the first procedure is an MBS session update procedure, and the MBS session update procedure is used to add a QoS flow to the first MBS session.

Optionally, the first procedure is a multicast session activation procedure, and the multicast session activation procedure is used to activate the first MBS session.

Optionally, that the transceiver module 1902 is configured to send the initial MBS QFI SN corresponding to the first MBS session to a network device includes: The transceiver module 1902 is configured to send a second message to the network device, where the second message includes the initial MBS QFI SN corresponding to the first MBS session, and the second message is used to carry an identifier of the first MBS session.

Optionally, the transceiver module 1902 is further configured to send first information to the network device, where the first information indicates whether an MBS QFI SN corresponding to the first MBS session is continuous or reset when the first MBS session is deactivated and then activated.

Optionally, that the transceiver module 1902 is configured to send first information to the network device includes: The transceiver module 1902 is configured to send a third message to the network device, where the third message includes the first information. The third message is used to request to establish or modify the first MBS session; the third message is used to deactivate the first MBS session; the third message is used to activate the first MBS session; the third message is used to update the first MBS session; or the third message is used to establish the shared transmission channel for the first MBS session.

Optionally, that the processing module 1901 is configured to obtain an initial MBS QFI SN corresponding to a first MBS session includes: The processing module 1901 is configured to receive, from a second core network device by using the transceiver module 1902, the initial MBS QFI SN corresponding to the first MBS session.

Optionally, the transceiver module 1902 is further configured to send second information to the second core network device, where the second information is used to request the initial MBS QFI SN corresponding to the first MBS session.

Optionally, the transceiver module 1902 is further configured to send a fourth message to the second core network device, where the fourth message is used to request to establish or modify a packet forwarding control protocol PFCP session. That the transceiver module 1902 is further configured to receive, from a second core network device, the initial MBS QFI SN corresponding to the first MBS session includes: The transceiver module 1902 is further configured to receive a fifth message from the second core network device, where the fifth message includes the initial MBS QFI SN corresponding to the first MBS session, and the fifth message is a response message for the fourth message.

Optionally, that the processing module 1901 is configured to obtain an initial MBS QFI SN corresponding to a first MBS session includes: The processing module 1901 is configured to receive, by using the transceiver module 1902, the first MBS QFI SN from a second core network device, where the first MBS QFI SN is the preset MBS QFI SN of the 1^{st} data packet; and the processing module 1901 is further configured to determine, based on the first MBS QFI SN, the initial MBS QFI SN corresponding to the first MBS session.

Optionally, the transceiver module 1902 is further configured to send the initial MBS QFI SN corresponding to the first MBS session or the first MBS QFI SN to a second core network device, where the first MBS QFI SN is the preset MBS QFI SN of the 1^{st} data packet.

Optionally, that the transceiver module 1902 is further configured to send the initial MBS QFI SN corresponding to the first MBS session or the first MBS QFI SN to a second core network device includes: Optionally, the transceiver module 1902 is further configured to send a fourth message to the second core network device, where the fourth message is used to request to establish or modify a PFCP session, and the fourth message includes the initial MBS QFI SN corresponding to the first MBS session or the first MBS QFI SN. The transceiver module 1902 is further configured to: receive a fifth message from the second core network device, where the fifth message is a response message for the fourth message; and when the fifth message indicates that the PFCP session is successfully established or modified, it indicates that the second core network device accepts the initial MBS QFI SN corresponding to the first MBS session or the first MBS QFI SN.

Optionally, that the processing module 1901 is configured to determine the initial MBS QFI SN corresponding to the first MBS session includes: The processing module 1901 is configured to receive, by using the transceiver module 1902, second information from a second core network device, where the second information is used to request the initial MBS QFI SN corresponding to the first MBS session; and the processing module 1901 is further configured to determine, based on the second information, the initial MBS QFI SN corresponding to the first MBS session.

Optionally, that the processing module 1901 is configured to determine the initial MBS QFI SN corresponding to the first MBS session includes: The processing module 1901 is configured to receive, by using the transceiver module 1902, a fourth message from a second core network device, where the fourth message is used to request to establish or modify a PFCP session; and the processing module 1901 is further configured to determine, by the first core network device based on the fourth message, the initial MBS QFI SN corresponding to the first MBS session.

In another possible implementation,
the processing module 1901 is configured to obtain first information; and the transceiver module 1902 is configured to send the first information to a network device. The first information indicates whether an MBS quality of service flow identifier QFI sequence number SN of a first multicast/broadcast service MBS session is continuous or reset when the first MBS session is deactivated and then activated.

Optionally, that the transceiver module 1902 is configured to send first information to a network device includes: The transceiver module 1902 is configured to send a third message to the network device, where the third message includes the first information. The third message is used to request to establish or modify the first MBS session; the third message is used to deactivate the first MBS session; the third message is used to activate the first MBS session; the third message is used to update the first MBS session; or the third message is used to establish the shared transmission channel for the first MBS session.

Optionally, the transceiver module 1902 is further configured to send the initial MBS QFI SN of the first MBS session to the network device in a first procedure. The initial MBS QFI SN corresponding to the first MBS session is used to determine an initial hyper frame number HFN and a reference SN. The first procedure is a procedure before the 1^{st} data packet of the first MBS session is sent to an access network device.

All related content of the steps in the foregoing method embodiments may be cited in function descriptions of the corresponding functional modules. Details are not described herein again.

In this application, the first core network device 190 is presented with the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art can figure out that the first core network device 190 may use a form of the communication apparatus 500 shown in FIG. 5.

In an example, functions/implementation processes of the processing module 1901 in FIG. 19 may be implemented by the processor 501 in the communication apparatus 500 shown in FIG. 5 by invoking the computer executable instructions stored in the memory 503. Functions/implementation processes of the transceiver module 1902 in FIG. 19 may be implemented by the communication interface 504 in the communication apparatus 500 shown in FIG. 5.

In some embodiments, when the first core network device 190 in FIG. 19 is a chip or a chip system, the functions/implementation processes of the transceiver module 1902 may be implemented by an input/output interface (or a communication interface) of the chip or the chip system, and the functions/implementation processes of the processing module 1901 may be implemented by a processor (or a processing circuit) of the chip or the chip system.

The first core network device 190 provided in embodiments may perform the foregoing methods. Therefore, for technical effects that can be achieved by the first core network device 190, refer to the foregoing method embodiments. Details are not described herein again.

Optionally, an example in which the communication apparatus is the access network device in the foregoing method embodiment is used. FIG. 20 is a diagram of a structure of an access network device 200. The access network device 200 includes a processing module 2001 and a transceiver module 2002.

In some embodiments, the access network device 200 may further include a storage module (not shown in FIG. 20), configured to store program instructions and data.

In some embodiments, the transceiver module 2002 may also be referred to as a transceiver unit, configured to implement a sending function and/or a receiving function. The transceiver module 2002 may include a transceiver circuit, a transceiver machine, a transceiver, or a communication interface.

In some embodiments, the transceiver module 2002 may include a receiving module and a sending module that are respectively configured to perform receiving steps and sending steps performed by the access network device in the method embodiment and/or configured to support another process of the technology described in this specification. The processing module 2001 may be configured to perform processing (for example, determining and generation) steps performed by the access network device in the method embodiment and/or configured to support another process of the technology described in this specification.

The transceiver module 2002 is configured to receive, from a session management network element in a first procedure, an initial MBS QFI SN corresponding to a first MBS session, where the first procedure is a procedure before the 1^{st} data packet of the first MBS session is received. The processing module 2001 is configured to determine an initial hyper frame number HFN and a reference SN based on the initial MBS QFI SN corresponding to the first MBS session. The transceiver module 2002 is further configured to send the initial HFN and the reference SN to a terminal device.

Optionally, the first procedure is a shared transmission channel setup procedure, the shared transmission channel setup procedure is used to establish a shared transmission channel for the first MBS session, and the shared transmission channel is used for data transmission between a core network and an access network.

Optionally, that the transceiver module 2002 is configured to receive, from a session management network element, an initial MBS QFI SN corresponding to a first MBS session includes: The transceiver module 2002 is configured to receive a first message from the session management network element, where the first message includes the initial MBS QFI SN corresponding to the first MBS session, and the first message is used to carry address information of the shared transmission channel and/or status information of the first MBS session.

Optionally, the first procedure is a PDU session setup procedure or a PDU session modification procedure, the PDU session setup procedure is used to establish or modify the first MBS session, and the PDU session modification procedure is used to establish or modify the first MBS session.

Optionally, the first procedure is an MBS session update procedure, and the MBS session update procedure is used to add a QoS flow to the first MBS session.

Optionally, the first procedure is a multicast session activation procedure, and the multicast session activation procedure is used to activate the first MBS session.

Optionally, that the transceiver module 2002 is configured to receive, from a session management network element, an initial MBS QFI SN corresponding to a first MBS session includes: The transceiver module 2002 is configured to receive a second message from the session management network element, where the second message includes the initial MBS QFI SN corresponding to the first MBS session, and the second message is used to carry an identifier of the first MBS session.

All related content of the steps in the foregoing method embodiments may be cited in function descriptions of the corresponding functional modules. Details are not described herein again.

In this application, the access network device 200 is presented with the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art can figure out that the access network device 200 may use a form of the communication apparatus 500 shown in FIG. 5.

In an example, functions/implementation processes of the processing module 2001 in FIG. 20 may be implemented by the processor 501 in the communication apparatus 500 shown in FIG. 5 by invoking the computer executable instructions stored in the memory 503. Functions/implementation processes of the transceiver module 2002 in FIG. 20 may be implemented by the communication interface 504 in the communication apparatus 500 shown in FIG. 5.

In some embodiments, when the access network device 200 in FIG. 20 is a chip or a chip system, the functions/implementation processes of the transceiver module 2002 may be implemented by an input/output interface (or a communication interface) of the chip or the chip system, and the functions/implementation processes of the processing module 2001 may be implemented by a processor (or a processing circuit) of the chip or the chip system.

The access network device 200 provided in embodiments may perform the foregoing methods. Therefore, for technical effects that can be achieved by the access network device 200, refer to the foregoing method embodiments. Details are not described herein again.

In a possible product form, the access network device or the core network device in embodiments of this application may be further implemented by using one or more field programmable gate arrays (field programmable gate arrays, FPGAs), a programmable logic device (programmable logic device, PLD), a controller, a state machine, a gate logic, a discrete hardware component, any other suitable circuit, or any combination of circuits that can perform various functions described in this application.

In another possible product form, the access network device in embodiments of this application may be implemented by using a general bus architecture. For ease of description, refer to FIG. 21. FIG. 21 is a diagram of a structure of a communication apparatus 2100 according to an embodiment of this application. The communication apparatus 2100 includes a processor 2101 and a transceiver 2102. The communication apparatus 2100 may be an access network device, or a chip or a module in the access network device. FIG. 21 shows only main components in the communication apparatus 2100. In addition to the processor 2101 and the transceiver 2102, the communication apparatus may further include a memory 2103.

Optionally, the processor 2101 is mainly configured to: process a communication protocol and communication data, and control the entire communication apparatus to execute a software program and process data of the software program. The memory 2103 is mainly configured to store a software program and data. The transceiver 2102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave.

Optionally, the processor 2101, the transceiver 2102, and the memory 2103 may be connected by using a communications bus.

After the communication apparatus is powered on, the processor 2101 may read the software program in the memory 2103, interpret and execute instructions of the software program, and process data of the software program. When data needs to be sent wirelessly, the processor 2101 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives the radio frequency signal by using the antenna, converts the radio frequency signal into a baseband signal, and outputs the baseband signal to the processor 2101. The processor 2101 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
obtaining, by a first core network device, an initial MBS quality of service flow identifier QFI sequence number SN corresponding to a first multicast/broadcast service MBS session, wherein the initial MBS QFI SN corresponding to the first MBS session is used to determine an initial COUNT value; and
sending, by the first core network device, the initial MBS QFI SN corresponding to the first MBS session to a network device in a first procedure, wherein the first procedure is a procedure before the 1^{st} data packet of the first MBS session is sent to an access network device.

2. The method according to claim 1, wherein the initial MBS QFI SN corresponding to the first MBS session comprises:
an initial MBS QFI SN of the first MBS session and/or an initial MBS QFI SN of at least one QoS flow of the first MBS session.

3. The method according to claim 1 or 2, wherein the initial MBS QFI SN corresponding to the first MBS session is less than or equal to a first MBS QFI SN, or a value obtained by subtracting the initial MBS QFI SN corresponding to the first MBS session from a first MBS QFI SN is less than or equal to a first value, wherein
the first MBS QFI SN is a preset MBS QFI SN of the 1^{st} data packet, and the first value is a nonnegative integer less than or equal to a packet data convergence protocol PDCP window size.

4. The method according to any one of claims 1 to 3, wherein the method further comprises:
sending, by the first core network device, the 1^{st} data packet to the access network device, wherein
the initial MBS QFI SN corresponding to the first MBS session is less than or equal to an MBS QFI SN of the 1^{st} data packet, or a value obtained by subtracting the initial MBS QFI SN corresponding to the first MBS session from an MBS QFI SN of the 1^{st} data packet is less than or equal to the first value, wherein the first value is the nonnegative integer less than or equal to the packet data convergence protocol PDCP window size.

5. The method according to any one of claims 1 to 3, wherein the first procedure is a shared transmission channel setup procedure, the shared transmission channel setup procedure is used to establish a shared transmission channel for the first MBS session, and the shared transmission channel is used for data transmission between a core network and an access network.

6. The method according to claim 5, wherein the sending, by the first core network device, the initial MBS QFI SN corresponding to the first MBS session to a network device comprises:
sending, by the first core network device, a first message to the network device, wherein the first message comprises the initial MBS QFI SN corresponding to the first MBS session, and the first message is used to carry address information of the shared transmission channel and/or status information of the first MBS session.

7. The method according to any one of claims 1 to 3, wherein the first procedure is a PDU session setup procedure or a PDU session modification procedure, the PDU session setup procedure is used to establish or modify the first MBS session, and the PDU session modification procedure is used to establish or modify the first MBS session.

8. The method according to any one of claims 1 to 3, wherein the first procedure is an MBS session update procedure, and the MBS session update procedure is used to add a QoS flow to the first MBS session.

9. The method according to any one of claims 1 to 3, wherein the first procedure is a multicast session activation procedure, and the multicast session activation procedure is used to activate the first MBS session.

10. The method according to any one of claims 7 to 9, wherein the sending, by the first core network device, the initial MBS QFI SN corresponding to the first MBS session to a network device comprises:
sending, by the first core network device, a second message to the network device, wherein the second message comprises the initial MBS QFI SN corresponding to the first MBS session, and the second message is used to carry an identifier of the first MBS session.

11. The method according to any one of claims 1 to 10, wherein the method further comprises:
sending, by the first core network device, first information to the network device, wherein the first information indicates whether an MBS QFI SN corresponding to the first MBS session is continuous or reset when the first MBS session is deactivated and then activated.

12. The method according to claim 11, wherein the sending, by the first core network device, first information to the network device comprises: sending, by the first core network device, a third message to the network device, wherein the third message comprises the first information, wherein
the third message is used to request to establish or modify the first MBS session;
the third message is used to deactivate the first MBS session;
the third message is used to activate the first MBS session;
the third message is used to update the first MBS session; or
the third message is used to establish the shared transmission channel for the first MBS session.

13. The method according to any one of claims 1 to 3 and 5 to 10, wherein the obtaining, by a first core network device, an initial MBS QFI SN corresponding to a first MBS session comprises:
receiving, by the first core network device from a second core network device, the initial MBS QFI SN corresponding to the first MBS session.

14. The method according to claim 13, wherein the method further comprises:
sending, by the first core network device, second information to the second core network device, wherein the second information is used to request the initial MBS QFI SN corresponding to the first MBS session.

15. The method according to claim 13, wherein the method further comprises:
sending, by the first core network device, a fourth message to the second core network device, wherein the fourth message is used to request to establish or modify a packet forwarding control protocol PFCP session; and
the receiving, by the first core network device from a second core network device, the initial MBS QFI SN corresponding to the first MBS session comprises:
receiving, by the first core network device, a fifth message from the second core network device, wherein the fifth message comprises the initial MBS QFI SN corresponding to the first MBS session, and the fifth message is a response message for the fourth message.

16. The method according to any one of claims 1 to 3 and 5 to 10, wherein the obtaining, by a first core network device, an initial MBS QFI SN corresponding to a first MBS session comprises:
receiving, by the first core network device, the first MBS QFI SN from a second core network device, wherein the first MBS QFI SN is the preset MBS QFI SN of the 1^{st} data packet; and
determining, by the first core network device based on the first MBS QFI SN, the initial MBS QFI SN corresponding to the first MBS session.

17. The method according to any one of claims 1 to 3 and 5 to 10, wherein the method further comprises:
sending, by the first core network device, the initial MBS QFI SN corresponding to the first MBS session or the first MBS QFI SN to a second core network device, wherein the first MBS QFI SN is the preset MBS QFI SN of the 1^{st} data packet.

18. The method according to claim 17, wherein the sending, by the first core network device, the initial MBS QFI SN corresponding to the first MBS session or the first MBS QFI SN to a second core network device comprises:
sending, by the first core network device, a fourth message to the second core network device, wherein the fourth message is used to request to establish or modify a PFCP session, and the fourth message comprises the initial MBS QFI SN corresponding to the first MBS session or the first MBS QFI SN; and
the method further comprises:
receiving, by the first core network device, a fifth message from the second core network device, wherein the fifth message is a response message for the fourth message, wherein
when the fifth message indicates that the PFCP session is successfully established or modified, it indicates that the second core network device accepts the initial MBS QFI SN corresponding to the first MBS session or the first MBS QFI SN.

19. The method according to any one of claims 1 to 12, wherein the determining, by the first core network device, the initial MBS QFI SN corresponding to the first MBS session comprises:
receiving, by the first core network device, second information from a second core network device, wherein the second information is used to request the initial MBS QFI SN corresponding to the first MBS session; and
determining, by the first core network device based on the second information, the initial MBS QFI SN corresponding to the first MBS session.

20. The method according to any one of claims 1 to 12, wherein the determining, by the first core network device, the initial MBS QFI SN corresponding to the first MBS session comprises:
receiving, by the first core network device, a fourth message from a second core network device, wherein the fourth message is used to request to establish or modify a PFCP session; and
determining, by the first core network device based on the fourth message, the initial MBS QFI SN corresponding to the first MBS session.

21. A communication method, wherein the method comprises:
receiving, by an access network device from a session management network element in a first procedure, an initial MBS quality of service flow identifier QFI sequence number SN corresponding to a first multicast/broadcast service MBS session, wherein the first procedure is a procedure before the 1^{st} data packet of the first MBS session is received;
determining, by the access network device, an initial COUNT value based on the initial MBS QFI SN corresponding to the first MBS session; and
sending, by the access network device, the initial COUNT value to a terminal device.

22. The method according to claim 21, wherein the first procedure is a shared transmission channel setup procedure, the shared transmission channel setup procedure is used to establish a shared transmission channel for the first MBS session, and the shared transmission channel is used for data transmission between a core network and an access network.

23. The method according to claim 22, wherein the receiving, by an access network device from a session management network element, an initial MBS QFI SN corresponding to a first MBS session comprises:
receiving, by the access network device, a first message from the session management network element, wherein the first message comprises the initial MBS QFI SN corresponding to the first MBS session, and the first message is used to carry address information of the shared transmission channel and/or status information of the first MBS session.

24. The method according to claim 21, wherein the first procedure is a PDU session setup procedure or a PDU session modification procedure, the PDU session setup procedure is used to establish or modify the first MBS session, and the PDU session modification procedure is used to establish or modify the first MBS session.

25. The method according to claim 21, wherein the first procedure is an MBS session update procedure, and the MBS session update procedure is used to add a QoS flow to the first MBS session.

26. The method according to claim 21, wherein the first procedure is a multicast session activation procedure, and the multicast session activation procedure is used to activate the first MBS session.

27. The method according to any one of claims 24 to 26, wherein the receiving, by an access network device from a session management network element, an initial MBS QFI SN corresponding to a first MBS session comprises:
receiving, by the access network device, a second message from the session management network element, wherein the second message comprises the initial MBS QFI SN corresponding to the first MBS session, and the second message is used to carry an identifier of the first MBS session.

28. The method according to any one of claims 1 to 27, wherein the initial COUNT value is an initial value of a state variable RX_DELIV.

29. A communication apparatus, wherein the communication apparatus comprises a processor, and the processor is configured to run a computer program or instructions, so that the communication apparatus performs the method according to any one of claims 1 to 20 or the method according to any one of claims 21 to 28.

30. A computer-readable storage medium, wherein the computer-readable storage medium stores computer instructions or a program, and when the computer instructions or the program is run on a computer, the method according to any one of claims 1 to 20 or the method according to any one of claims 21 to 28 is performed.

31. A computer program product, wherein the computer program product comprises computer instructions, and when some or all of the computer instructions are run on a computer, the method according to any one of claims 1 to 20 or the method according to any one of claims 21 to 28 is performed.
